(19) **Europäisches Patentamt**
**European Patent Office**
**Office européen des brevets**

(11) **EP 1 825 356 B1**

(12) **EUROPÄISCHE PATENTSCHRIFT**

(45) Veröffentlichungstag und Bekanntmachung des Hinweises auf die Patenterteilung:
**03.08.2016 Patentblatt 2016/31**

(51) Int Cl.:
**G06F 7/499** *(2006.01)* **G06F 7/544** *(2006.01)*
**G10L 19/02** *(2013.01)*

(21) Anmeldenummer: **05850069.5**

(22) Anmeldetag: **13.12.2005**

(86) Internationale Anmeldenummer:
**PCT/EP2005/013383**

(87) Internationale Veröffentlichungsnummer:
**WO 2006/063797 (22.06.2006 Gazette 2006/25)**

(54) **VERFAHREN ZUM BILDEN EINER DARSTELLUNG EINES VON EINEM QUADRAT EINES WERTES LINEAR ABHÄNGIGEN BERECHNUNGSERGEBNISSES**

METHOD FOR PRODUCING A REPRESENTATION OF A CALCULATION RESULT THAT IS LINEARLY DEPENDENT ON THE SQUARE OF A VALUE

PROCEDE POUR OBTENIR UNE REPRESENTATION D'UN RESULTAT DE CALCUL DEPENDANT LINEAIREMENT DU CARRE D'UNE VALEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.12.2004 DE 102004059979**

(43) Veröffentlichungstag der Anmeldung:
**29.08.2007 Patentblatt 2007/35**

(60) Teilanmeldung:
**07013279.0 / 1 843 246**

(73) Patentinhaber: **Fraunhofer-Gesellschaft zur Förderung der angewandten Forschung e.V.**
**80686 München (DE)**

(72) Erfinder:
- **GAYER, Marc**
 **91054 Erlangen (DE)**
- **LUTZKY, Manfred**
 **90427 Nürnberg (DE)**
- **LOHWASSER, Markus**
 **91217 Hersbruck (DE)**
- **DISCH, Sascha**
 **90763 Fürth (DE)**
- **HILPERT, Johannes**
 **90411 Nürnberg (DE)**
- **GEYERSBERGER, Stefan**
 **97076 Würzburg (DE)**

- **GRILL, Bernhard**
 **91207 Lauf (DE)**

(74) Vertreter: **Schenk, Markus**
**Schoppe, Zimmermann, Stöckeler Zinkler, Schenk & Partner mbB Patentanwälte**
**Radlkoferstrasse 2**
**81373 München (DE)**

(56) Entgegenhaltungen:
WO-A1-99/50828  US-A- 5 570 454
US-B1- 6 341 300  US-B1- 6 460 063
US-B1- 6 728 739  US-B1- 6 754 618

- **PATENT ABSTRACTS OF JAPAN Bd. 011, Nr. 012 (P-535), 13. Januar 1987 (1987-01-13) & JP 61 188624 A (FUJITSU LTD), 22. August 1986 (1986-08-22)**
- **CHHABRA, A. IYER, R.: 'A Block Floating Point Implementation on the TMS320C54x DSP' Dezember 1999, Seiten 1 - 10, XP007903070**
- **DO HYOUNG KIM; DONG HYUN KIM; JAE HO CHUNG: "Optimization of MPEG-4 GA AAC on general PC", PROCEEDINGS OF THE 44TH. IEEE MIDWEST SYMPOSIUM ON CIRCUITS AND SYSTEMS (MWSCAS) 2001. DAYTON, OH, vol. 2, 14 August 2001 (2001-08-14), pages 923-925, XP010579346, New York**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf die Audiocodierung mit Berechnung von Spektralgruppenenergien eines Audiosignals wie sie beispielsweise bei manchen Audiocodierern benötigt wird, bei denen gemäß einem psychoakustischen Modell Frequenzlinien zu Frequenzgruppen zusammengefasst werden, um mit den Signalenergien der Frequenzgruppen die weitere Codierung vorzunehmen.

In modernen, filterbankbasierten Audiocodierverfahren, wie z.B. MPEG Layer-3 oder MPEG AAC, wird im Kodierer bzw. Encoder ein psychoakustisches Modell verwendet. In diesem psychoakustischen Modell wird das Gesamtspektrum des in den Frequenzbereich transformierten Audiosignals in einzelne Frequenzgruppen unterschiedlicher Breite bzw. mit einer unterschiedlichen Anzahl von Frequenzlinien pro Frequenzgruppe eingeteilt. Zur Berechnung der psychoakustischen Mithörschwellen, zur Entscheidung ob Mitte-Seite-Stereocodierung verwendet werden soll und zur Schätzung bzw. Berechnung der Skalenfaktoren im Quantisierungsmodul des Audioencoders werden im psychoakustischen Modell die Signalenergien der Audiosignalanteile in den einzelnen Frequenzgruppen berechnet. Dies geschieht durch Quadrierung jeder einzelnen Frequenzlinie, wodurch sich die Linienenergien ergeben, und nachfolgender Aufsummation aller Linienenergien in einer Frequenzgruppe zur Bandenergie einer Frequenzgruppe, von denen es z. B. bei MPEG AAC ca. 40 bis 60 pro Audiokanal geben kann.

Im Folgenden soll der spezielle Anwendungsfall einer Implementierung eines solchen Verfahrens auf einem Festkommaprozessor betrachtet werden.

Die Frequenzlinien werden in Festkornmadarstellung mit einer Wortbreite von z.B. 24 Bit oder 32 Bit dargestellt. Eine Wortbreite von nur 16 Bit ist nicht ausreichend. Es wird ein globaler Skalierungsfaktor oder ein Schiebefaktor verwendet, der für alle Frequenzlinien eines Audiokanals oder auch für alle in einem Encoder bearbeiteten Frequenzlinien aller Audiokanäle gilt und bestimmt, um wie viele Stellen jeder Frequenzlinienwert nach links oder rechts geschoben werden muss, so dass die ursprüngliche Skalierung wieder erreicht wird, was als Blockfloatingpointdarstellung bezeichnet wird. Dies heißt, dass alle Frequenzlinien zumindest eines Audiokanals gleich ausgesteuert sind bzw. sich auf dem gleichen Skalierungsniveau befinden. Bei Berücksichtigung der im allgemeinen hohen Dynamik der einzelnen Amplituden der Frequenzlinien sind dadurch einige Frequenzlinien mit relativ hoher Genauigkeit, wie z.B. 22 gültige Bits bei 24-Bit-Wortbreite oder 30 gültige Bits bei 32-Bit-Wortbreite, dargestellt, andere jedoch mit nur wenigen gültigen Bits und damit eher ungenau.

Bei der Implementierung oben beschriebener filterbankbasierter Audiocodierverfahren auf einem Festkommaprozessor treten nun Probleme auf, wie sie im Folgenden dargestellt werden.

Zunächst betreffen die Probleme die Darstellung der Signalenergien selbst. Die Signalenergien, d.h. die aufsummierten Quadrate der Frequenzlinien, haben durch die Quadratbildung eine doppelt so hohe Dynamik wie die Frequenzlinien, wenn die gesamte Genauigkeit beibehalten werden soll.

Es bestehen durchaus unterschiedliche Möglichkeiten, die Signalenergien darzustellen. Eine Möglichkeit besteht in der Repräsentation der Signalenergien durch einen Datentyp mit doppelt so großer Wortbreite wie im für die Darstellung der Frequenzlinien verwendeten Datentyp, also beispielsweise in einem 48 Bit oder 64 Bit breiten Datentyp. Man stelle sich beispielsweise eine Frequenzlinie mit 22 gültigen Bits vor, die in einem 24-Bit-Datentyp dargestellt ist. Dann würde die Signalenergie aufgrund der Aufsummierung zusammen mit den anderen Frequenzlinien mindestens 44 gültige Bits aufweisen und in einem 48-Bit-Datentyp dargestellt werden. Diese Vorgehensweise ist allerdings zumindest für 64-Bit-Energien, d.h. in Fällen, da die Frequenzlinien in einem 32-Bit-Datentyp dargestellt sind, nicht praktikabel, da die meisten gebräuchlichen Festkommaprozessoren einen 64-Bit-Datentyp entweder überhaupt nicht unterstützen oder aber Speicherzugriffe und Berechnungen mit einem 64-Bit-Datentyp extrem langsam im Vergleich zu beispielsweise 32-Bit-Zugriffen und Berechnungen sind. Zudem ist der Speicherverbrauch bei 64-Bit-Daten sehr viel höher.

Eine andere Möglichkeit der Darstellung der Signalenergien besteht in der Repräsentation durch einen Fließkommadatentyp mittels Mantisse und Exponent. Es werde beispielsweise wieder von dem obigen Beispielfall ausgegangen, dass eine Frequenzlinie mit 22 gültigen Bits in einem 24-Bit-Datentyp dargestellt ist. Die Signalenergie der entsprechenden Gruppe würde dann in einem standardisierten oder proprietären Fließkommadatentyp mit 16-Bit-Mantisse inklusive Vorzeichenbit und einem 8-Bit-Exponenten dargestellt werden. Es ist hierbei nicht von Belang, ob es sich dabei um einen standardisierten Fließkommadatentyp, wie z.B. IEEE-P754, oder einen proprietären Fließkommadatentyp mit frei gewählter Mantissen- und Exponentenbreite handelt. Auf einem Festkommaprozessor ohne Fließkommarechenwerk werden Berechnungen mit Fließkommadatentypen immer durch mehrere Rechenschritte emuliert werden müssen und extrem langsam sein, so dass diese Vorgehensweise nicht praktikabel ist.

Ein weiteres Problemfeld bei der Implementierung obiger filterbankbasierter Audiocodierverfahren auf einem Festkommaprozessor betrifft die Weiterverarbeitung der Signalenergien im Laufe des Codierverfahrens. Die Signalenergien und die daraus abgeleiteten Mithörschwellen werden im weiteren Ablauf des Audioencoders an einer Vielzahl von verschiedenen Stellen im Algorithmus dazu verwendet, beispielsweise Verhältnisse oder Quotienten z.B. zwischen Signalenergie und Mithörschwelle zu berechnen. Eine hierzu erforderliche Division ist auf einem Festkommaprozessor nicht einfach durchzuführen.

Eine Möglichkeit, eine Division auf einem Festkommaprozessor durchzuführen, besteht in der Verwendung von Single-Bit-Divisionsbefehlen bzw. Ein-Bit-Divisionsbefehlen, die auf manchen Festkommaprozessoren implementiert sind und pro Aufruf ein zusätzliches Bit an Genauigkeit im Quotienten liefern. Für eine Division mit beispielsweise 48-Bit-Genauigkeit wären somit 48 einzelne Divisionsbefehle für eine einzige Division zweier Signalenergien oder einer Signalenergie und einer Mithörschwelle nötig. Das ist aufgrund des hohen damit verbundenen Rechenzeitaufwands nicht praktikabel bzw. sehr ineffizient.

Eine andere Möglichkeit der Implementierung einer Division auf einem Festkommaprozessor besteht in der Verwendung von Tabellen, gegebenenfalls in Verbindung mit nachfolgenden Iterationsschritten zur Erhöhung der Genauigkeit des Divisionsergebnisse. Diese Vorgehensweise ist aber oft nicht praktikabel, da für die geforderte Genauigkeit des Divisionsergebnisses entweder eine sehr große Tabelle verwendet werden muss oder nachfolgende Iterationsschritte wiederum einen zu hohen Rechenzeitbedarf haben.

Beide genannte Verfahren können auf einem Festkommaprozessor in Verbindung mit Festkommadatentypen oder per Software emulierten Fließkommadatentypen benutzt werden, was aber in keinem Fall eine ausreichend effiziente Anwendung in Bezug auf Rechenzeit und Speicherverbrauch und gleichzeitig Ergebnisgenauigkeit ermöglicht.

Obige Probleme würden sich bei Verwendung eines GPP (General Purpose Processor) nicht ergeben. Für viele Anwendungen verbietet es sich aber aufgrund des hohen Preisdrucks und der hohen Stückzahl automatisch, zur Implementierung von Audioencodern auf Prozessoren zurückzugreifen, die leistungsvoller sind als Festkommaprozessoren ohne Fließkommarechenwerk. Beispiele für solche Anwendungen sind Handys und PDAs.

Auf das Problem der SMR-Berechnung, d.h. der Berechnung des Verhältnisses zwischen Signalenergie und Mithörschwelle, geht die US 6,754,618 B1 ein, und zwar vor dem Hintergrund der Verwendung von Festpunkt-DSP-Chips. Gemäß der dort vorgeschlagenen Vorgehensweise wird zunächst die übliche Fensterung und anschließende Fourier-Transformation zur Zerlegung eines Audiosignals in seine spektralen Bestandteile durchgeführt, woraufhin die Energie jedes Eingangssignals bzw. Frequenzliniensignals, also die Linienenergie, aus dem Real- und Imaginärteil des jeweiligen Frequenzlinienwertes berechnet wird. Ohne auf die Bildung der Signalenergien der Gruppen von Frequenzlinien weiter einzugehen, könne das Verfahren auch von den Signalenergien dieser Gruppen ausgehend fortgeführt werden. In der Druckschrift wird nun ausgeführt, dass versucht werde, das Problem zu beseitigen, dass die Eingangsdaten, d.h. die Energien, meistens einen zu großen Dynamikbereich aufweisen, da die meisten Festkomma-DSP-Chips lediglich 16 bis 24 Bits Datenbreite ausweisen würden, wohingegen der MPEG-Standard eine Datenbreite von 34 Bits, d.h. einen Dynamikbereich von 101 dB benötige. Die Energien müssten deshalb zunächst skaliert werden. Insbesondere wird vorgeschlagen, von der früheren Vorgehensweise abzuweichen und zwei unterschiedliche Skalierungswerte zu verwenden. Genauer ausgedrückt wird gemäß dieser Druckschrift die Energie gegen einen Schwellwert verglichen und je nachdem abwärts oder aufwärts skaliert, um bei einem Übergang in einen logarithmischen Bereich das Logarithmusergebnis mit 16 Bits ausreichend darstellen zu können, und um in dem logarithmischen Bereich mit 16 Bits das SMR-Verhältnis berechnen zu können. Je nach Aufwärtsskalierung oder Abwärtsskalierung wird eine unterschiedliche Tabelle für die Schwellwerte verwendet. Zur Logarithmierung wird ein Zehner-Logarithmus multipliziert mal 10 verwendet, so dass die Einheit dB erhalten wird. Ist das Ergebnis der Logarithmierung der aufwärts skalierten Linienenergien Null, so wird das SMR-Verhältnis durch Logarithmierung der aufwärts skalierten Linienenergie minus dem Logarithmus der Schwellwertenergie multipliziert mit 10 berechnet. Andernfalls werden die Ergebnisse der aufwärts skalierten Linienenergie und der abwärts skalierten Linienenergie miteinander kombiniert.

Die in der US 6,754,618 B1 vorgeschlagene Vorgehensweise umgeht zwar einige der im Vorhergehenden erwähnten Probleme im Hinblick auf die Weiterverarbeitung der Signalenergien, indem sie vorschlägt, das SMR-Verhältnis im logarithmischen Bereich zu berechnen. Hierdurch entfällt nämlich die aufwendige Divisionsberechnung. Nachteilhaft an der Vorgehensweise ist jedoch, dass die Logarithmusberechnung noch relativ aufwendig ist, da erst nach der Logarithmusberechnung der Wertebereich für eine 16-Bit-Festkommadarstellung ausgelegt ist, wie sie für 16-Bit-DSP-Festkommaprozessoren geeignet ist, während die Logarithmierung an sich noch an den in hoher Dynamik vorliegenden Energien durchgeführt wird, weshalb zudem sogar zwei Logarithmierungen pro Energiewert erforderlich sind.

Wünschenswert wäre es deshalb, wenn auch der Übergang in den logarithmischen Bereich vereinfacht werden könnte, ohne dass ein Dynamikverlust eintritt.

Die US 5,608,663 beschäftigt sich mit der schnellen Ausführung paralleler Multiplikationen von Fließkommazahlen mittels Konversion in ein logarithmisches Festkommaformat, Addition im logarithmischen Bereich und anschließender Rückkonversion.

Die US 5,197,024 beschäftigt sich ganz allgemein mit einer Exponential/Logarithmus-Berechnung und einer entsprechenden Vorrichtung.

Die US 6,732,071 beschäftigt sich mit einer effizienten Lösung für eine Ratensteuerung bei der Audiocodierung und verwendet zur Bestimmung eines Quantisierungsparameterwerts eine Schleifeniteration mit einer Beendigungsbedingung, nach welcher der Quantisierungsparameterwert mit einem Ausdruck verglichen wird, der sich aus einem Zweier-Logarithmus eines Ausdrucks herleitet, der von einem maximalen Frequenzlinienwert abhängt.

Die US 6,351,730 beschreibt die Verwendung eines Logarithmus zur Basis 2 für eine Gain-Berechnung im Rahmen einer Audiocodierung. Die Gain-Werte werden zur Bitzuteilung in einem MDCT-codierten Audiocodec verwendet.

Die US 5,764,698 beschreibt die Verwendung eines natürlichen Logarithmus zur Darstellung von Audiosignalenergien. Eine nähere Beschreibung des Übergangs in den logarithmischen Bereich erfolgt nicht.

Die Aufgabe der vorliegenden Erfindung besteht darin, einen Audiocodierer und ein Audiocodierverfahren zu schaffen, so dass die oben erörterte Berechnung einfacher bzw. mit weniger Hardwareaufwand möglich ist.

Diese Aufgabe wird durch den Gegenstand der unabhängigen Ansprüche gelöst.

Die Erkenntnis der vorliegenden Erfindung besteht darin, dass es nicht notwendig ist, bei dem Übergang in den logarithmischen Bereich die gesamte Bitbreite des von dem Quadrat des Wertes linear abhängigen Ergebnisses zu berücksichtigen. Vielmehr ist es möglich, bei einem Wert mit x Bits eine Skalierung des Ergebnisses derart vorzunehmen, dass eine Darstellung mit weniger als x Bits des Ergebnisses ausreichend ist, um basierend auf demselben die logarithmische Darstellung zu gewinnen. Die Auswirkung des Skalierungsfaktors auf die sich ergebende logarithmische Darstellung kann durch Addieren oder Subtrahieren eines durch die Logarithmusfunktion angewendet auf den Skalierungsfaktor gewonnenen Korrekturwertes zu bzw. von der skalierten logarithmischen Darstellung ohne Dynamikverlust aufgehoben werden.

Ein Vorteil der vorliegenden Erfindung besteht deshalb darin, dass auf die erfindungsgemäße Weise eine Mehrzahl von Ergebnissen auf eine Art und Weise in eine logarithmische Darstellung überführt werden können, so dass anschließend im wesentlichen bewahrter Dynamik das Skalierungsniveau für alle das gleiche ist.

Die Verarbeitung der x-Bit-Darstellung des Wertes, um das Berechnungsergebnis zu erhalten, das linear von dem Wert abhängt, besteht in der Bildung einer Quadratsumme einer Gruppe von Werten. Anstatt jedoch den effektiven Skalierungsfaktor erst nach der Quadratsummenberechnung durchzuführen, werden die x-Bit-Darstellungen bereits vorher mit einem gemeinsamen Skalierungsfaktor skaliert. Der gemeinsame Skalierungsfaktor wird dabei aus der Anzahl an Werten und/oder anhand der größten Anzahl an gültigen Stellen unter den x-Bit-Darstellungen der Werte bestimmt. Diese Vorgehensweise ermöglicht es, von der Ausgangsituation mit den x-Bit-Darstellungen der Werte aus durchgehend im x-Bit-Darstellungsformat zu bleiben. Dies gilt für die Quadrate der einzelnen Werte ebenso wie die Summe der einzelnen Quadrate. Der gemeinsame Skalierungsfaktor wird dabei derart bestimmt, dass die Quadratsumme durch die Summation keinen Überlauf erfährt. Die Durchführung der Logarithmusfunktion wird an einem Ausschnitt der nicht-logarithmierten x-Bit-Darstellung der Quadratsumme durchgeführt. Der Vorteil, dass die Vorgehensweise für mehrere Gruppen von Werten verwendet werden kann, bleibt bestehen, so dass einerseits die Werte der einzelnen Gruppen mit unterschiedlichem gemeinsamen Skalierungsfaktor skaliert werden, und andererseits anschließend das Skalierungsniveau für die logarithmische Darstellung aller Quadratsummen das gleiche ist.

Gemäß einem bevorzugten Ausführungsbeispiel der vorliegenden Erfindung wird als Logarithmusfunktion ein Logarithmus Dualis verwendet zusammen mit einem Faktor, der kleiner oder gleich $1/y$ ist. Auf diese Weise ist es möglich, die Abbildung zwischen der y-Bit-Darstellung des Berechnungsergebnisses und der skalierten logarithmierten Darstellung des Berechnungsergebnisses auf eine Weise vorzunehmen, die die Wertebereiche beider Darstellungen optimal ausnutzt.

Zur Audiocodierung können die Spektrallinienwerte einer Gruppe auf die oben beschriebene Weise gruppenweise einer Quadratsummenbildung unterzogen werden, nämlich durch Skalieren der Spektrallinienwerte vor der Quadratsummenberechnung, wobei die Frequenzlinienwerte in einem nicht-logarithmischen x-Bit-Festkommadatenformat vorliegen, Aufsummieren der sich ergebenden Einzelquadrate, die ebenfalls nur im x-Bit-Festkommadatenformat vorliegen müssen, Anwenden der Logarithmusfunktion, die die Logarithmierung mit dem Logarithmus Dualis und die Skalierung mit dem Faktor kleiner oder gleich $1/x$ aufweist, auf die Quadratsumme und Addieren oder Subtrahieren eines durch die Logarithmusfunktion aus dem gemeinsamen Skalierungsfaktor erhaltenen Korrekturwertes zu bzw. von der x-Bit-Festkommadarstellung des Logarithmierungsergebnisses. Auf diese Weise werden die Signalenergien aller Spektralgruppen auf gleichem Skalierungsniveau erhalten, ohne die Dynamik zu verringern. Zudem kann jede der Rechenoperationen mit einem Rechenwerk durchgeführt werden, das lediglich zur Verarbeitung von Festkommazahlen mit x Bits ausgelegt ist. Ein Vorteil besteht folglich darin, dass es möglich ist, den Audiocodierer auf einem 16- oder 24-Bit-Festkomma-DSP zu implementieren, ohne dass hierzu eine aufwendige Programmierung mit dem damit verbundenen erhöhten Rechenzeitaufwand notwendig wäre.

Bevorzugte Ausführungsbeispiele der vorliegenden Erfindung werden nachfolgend Bezug nehmend auf die beiliegenden Zeichnungen näher erläutert. Es zeigen:

Fig. 1          eine schematische Darstellung zur Veranschaulichung des Aufbaus eines 32-Bit-Festkommadatenformats;

Fig. 2a und 2b  schematische Darstellungen einer Quadration eines 32-Bit-Festkommadatenwerts zur Veranschaulichung der Auswirkung zu kleiner Werte auf das 64-Bit-Festkommaergebnis;

Fig. 3    einen Graphen einer Logarithmusfunktion gemäß einem Ausführungsbeispiel der vorliegenden Erfindung;

Fig. 4    ein schematisches Blockschaltbild einer Quadratsummenbildungsvorrichtung;

Fig. 5    ein Blockschaltbild einer möglichen Implementierung der Vorrichtung von Fig. 4;

Fig. 6    ein Flussdiagramm zur Veranschaulichung der Funktionsweise der Vorrichtung nach Fig. 5; und

Fig. 7    ein schematisches Blockschaltbild zur Veranschaulichung eines Audiocodierers gemäß einem Ausführungsbeispiel der vorliegenden Erfindung.

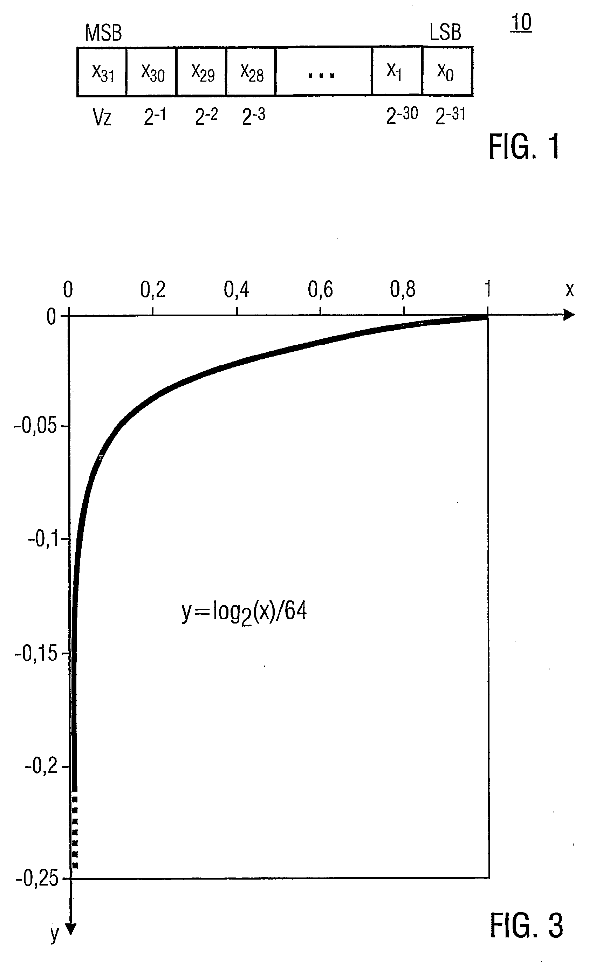

Bevor Ausführungsbeispiele der vorliegenden Erfindung näher erläutert werden, soll im Folgenden Bezug nehmend auf die Fig. 1 - 3 eine Hinführung zu diesen Ausführungsbeispielen geliefert werden, die eher übersichtlicher Art ist und die Vorteile der nachfolgenden Ausführungsbeispiele besser erkennen lässt.

Fig. 1 zeigt den Aufbau eines möglichen 32-Bit-Festkommadatenformats, das den nachfolgend erläuterten Ausführungsbeispielen exemplarisch zugrunde liegt. Das dargestellte 32-Bit-Datenformat ist ohne weiteres auch auf andere Bitzahlen übertragbar. Wie es zu sehen ist, weist ein in dem 32-Bit-Festkommadatenformat gespeicherter Wert 32 Bits auf. Zur Speicherung dieses Werts im 32-Bit-Festkommadatenformat reicht deshalb ein 32-Bit-Register aus. Ein solches Register ist in Fig. 1 mit 10 angezeigt. Die 32 Bitpositionen sind mit einzelnen Quadraten angedeutet, die mit $X_0 \ldots X_{31}$ vom niedrigstwertigen Bit (LSB) zum höchstwertigen Bit (MSB) durchnummeriert sind. Die Bedeutung der einzelnen Bitpositionen gemäß dem 32-Bit-Festkommadatenformat sind unterhalb der einzelnen Bitpositionen angedeutet. Wie es zu erkennen ist, gibt das höchstwertige Bit das Vorzeichen des Wertes an, d.h. + oder -. Die restlichen Bits $X_{30}$ - Xo geben den Betrag des Wertes wieder. Gemäß dem Ausführungsbeispiel von Fig. 1 stellen diese Bits einen echten Bruch dar, d.h. das Datenformat 10 ist ein Fractional- bzw. Bruch-Festkommadatenformat, bei dem per Konvention der Punkt bzw. das Komma ganz links, d.h. links vor dem Bit $X_{30}$, angeordnet ist. Der Wert in dem Register 10 lässt sich somit angeben als

$$X = (-1)^{X_{31}} \sum_{i=0}^{30} X_i \cdot 2^{i-31} .$$

Wie es ohne weiteres ersichtlich ist, erstreckt sich der darstellbare Wertebereich des Fractional-Festkommadatenformats in etwa von -1 ausschließlich bis 1 ausschließlich.

Wie es nun in der Beschreibungseinleitung der vorliegenden Anmeldung beschrieben worden ist, werden beispielsweise Signalenergien durch Quadrierung der Frequenzlinien und Aufsummation aller quadrierten Frequenzlinien, d.h. der Linienenergien, in einer Frequenzgruppe erhalten. Die Anzahl der in einer Frequenzgruppe enthaltenen Linien beträgt beispielsweise bei MPEG Layer-3 und MPEG AAC zwischen 4 und 96.

Wie es nun ebenfalls in der Beschreibungseinleitung der vorliegenden Anmeldung beschrieben wurde, ist es möglich, die Frequenzlinienwerte in einem Festkommadatenformat darzustellen, indem ein globaler Skalierungsfaktor verwendet wird, der für alle Frequenzlinien eines Audiokanals oder sogar für alle in einem Encoder bearbeiteten Frequenzlinien aller Audiokanäle gilt und bestimmt, um wie viele Stellen jeder Frequenzlinienwert decoderseitig nach links oder rechts geschoben werden muss, so dass die ursprüngliche Skalierung wieder erreicht wird. Um nun solche 32-Bit-Festkommadatenwerte auf einem Festkommaprozessor mit 32-Bit-Datenwortbreite einer Quadratsummation zur Berechnung der Audiosignalenergien zu unterziehen, müssen für eine effiziente Implementierung der Berechnung der Audiosignalenergien aus den Frequenzlinien folgende Grundvoraussetzungen erfüllt sein:

-    Die Frequenzlinien müssen mit einer Wortbreite von 32 Bits dargestellt werden. 16 Bits sind nicht ausreichend.

-    Die Audiosignalenergien sollen ebenfalls in einem Festkommadatenformat und nicht in einem Fließkommadatenformat dargestellt werden.

-    Die Audiosignalenergien sollen in einem Datentyp mit einer nicht größeren Wortbreite als 32 Bit dargestellt werden. Daraus ergibt sich auch für die Audiosignalenergien eine Wortbreite von 32 Bits.

Die nachfolgend beschriebenen speziellen Ausführungsbeispiele der vorliegenden Erfindung erfüllen all diese Grundvoraussetzungen, wobei jedoch angemerkt werden soll, dass eine weniger effiziente Implementierung erhalten werden kann, wenn nicht alle dieser Grundvoraussetzungen erfüllt sind. Wie es später noch erörtert werden wird, ist es beispielsweise nicht unbedingt erforderlich, dass die Audiosignalenergien in ihrer Wortbreite auf 32 Bit begrenzt werden. Lediglich die Weiterverarbeitung der Audiosignalenergien soll sich auf eine 32-Bit-Festkommadarstellung begrenzen.

Aus den obigen Voraussetzungen ergibt sich folgendes Problem bei der Berechnung der Audiosignalenergien. Die Quadrierung der 32-Bit-Frequenzlinienwerte ergibt zunächst Linienenergien mit einer Wortbreite von 64 Bits, wobei jedoch die 32 Bits - in dem Fall der nachfolgenden Ausführungsbeispiele die unteren 32 Bits - in der weiteren Verarbeitung verworfen werden, und in der Fractional-Arithmetik lediglich mit den oberen 32 Bits weitergearbeitet wird.

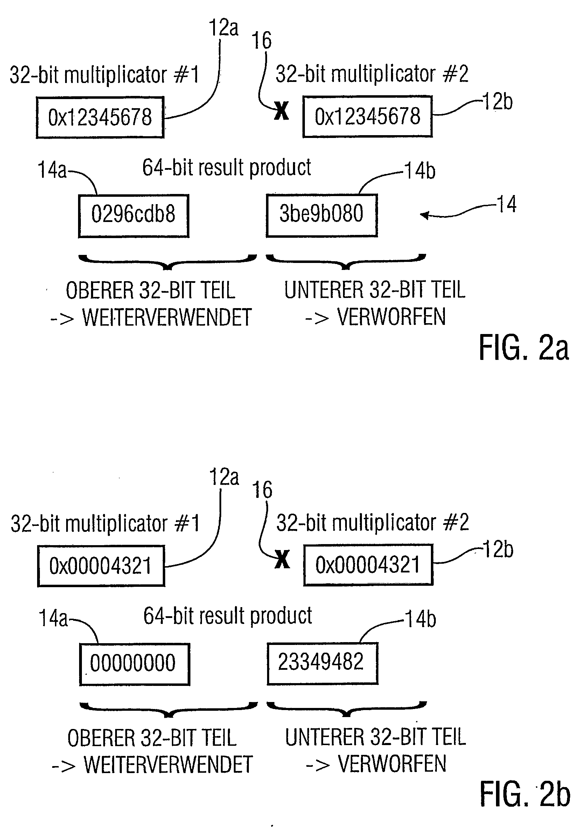

Um dies zu veranschaulichen, sei Bezug auf Fig. 2a und 2b genommen. Diese zeigen zwei Eingangsregister 12a und 12b eines Multiplizierers, der als Quadrierer verwendet wird, indem in die Eingangsmultiplikandenregister 12a und 12b die gleichen Werte eingeschrieben werden. Beide Register 12a und 12b sind 32-Bit-Register. Ferner zeigen die Fig. 2a und 2b ein 64-Bit-Ausgangsregister 14, das sich aus einem oberen Teil 14a und einem unteren Teil 14b zusammensetzt. Der Multiplizierer, der in den Fig. 2a und 2b nicht weiter dargestellt ist, ist dazu ausgelegt, die Registerinhalte der Register 12a und 12b im 32-Bit-Festkommadatenformat zu lesen und die beiden Werte zu multiplizieren 16, so dass sich ein 64-Bit-Ergebnis ergibt, das in das Ausgangsregister 14 in einem 64-Bit-Festkommadatenformat ausgegeben wird. Der obere Teil 14a des Ausgangsregisters 14 deckt somit die ersten 31 Binärstellen hinter dem Komma ab, während der untere Teil 14b die restlichen Binärstellen abdeckt.

Die Fig. 2a und 2b zeigen Situationen, bei denen unterschiedliche Frequenzlinienwerte in die Eingangsregister 12a und 12b eingeschrieben worden sind, so dass sich unterschiedliche Ergebnisse im Ausgangsregister 14 ergeben.

Insbesondere zeigt Fig. 2a eine Situation, bei der der Frequenzlinienwert hoch ist, nämlich 0x12345678. Solange die Frequenzlinienwerte hoch ausgesteuert sind, also eine hohe Anzahl von gültigen Bits im 32-Bit-Datenwort belegen, sind die oberen 32 Bits des eigentlich 64 Bit breiten Ergebnisses im Ausgangsregister 14 ausreichend genau, um das Ergebnis bzw. das Quadrat wiederzugeben. Der Fehler, der begangen wird, wenn anstelle des vollständigen Ergebnisses lediglich der obere Teil 14a verwendet wird, beträgt in dem Fall von Fig. 2a lediglich 0x000000003be9b080.

Fig. 2b zeigt den Fall eines kleinen Frequenzlinienwerts in dem Eingangsregister 12a bzw. 12b, nämlich 0x00004321. Solche Frequenzlinienwerte kommen ebenfalls vor, da, wie bereits erwähnt, alle Frequenzlinien zumindest eines Audiokanals einen globalen Skalierungsfaktor haben und somit in der Regel eine große Anzahl von Frequenzlinien nur eine geringe Anzahl von gültigen Bits in einem 32-Bit-Datenwort belegen, also eine geringe Amplitude aufweisen. Wie sich aus Fig. 2b ergibt, stellen die oberen 32 Bits des Ausgangsregisters 14 in dem Fall kleiner Frequenzlinienwerte das Quadrationsergebnis nicht mit ausreichender Genauigkeit wieder. Insbesondere eine Aufsummation mehrerer solcher Linienenergien zu einem Signalenergiewert wird somit ein falsches Ergebnis liefern, nämlich beispielsweise Null, das im späteren Ablauf einer Audiocodierung zu einer verminderten Audioqualität führt. In dem Beispiel von Fig. 2b wird der obere Teil des Ausgangsregisters beispielsweise das Ergebnis von Null anzeigen, während der tatsächliche Ergebniswert 0x0000000023349482 wäre.

Betrachtet man die Beispiele von Fig. 2a und 2b, erscheint es zunächst erforderlich zu sein, alle 64 Bits des Ausgangsregisters 14 bei nachfolgenden Verarbeitungen der Signalenergien zu berücksichtigen. Dies würde jedoch eine Vielzahl von komplizierten 64-Bit-Datenoperationen notwendig machen, d.h. Operationen mit 64-Bit-Operanden, und gegen obige Grundvoraussetzungen für eine effiziente Implementierung verstoßen.

Soll aber tatsächlich von jedem Signalenergiewert in dem Ausgangsregister 14 lediglich der obere 32-Bit-Teil verwendet werden, kann eine Verbesserung zunächst dadurch erreicht werden, dass alle Frequenzlinienwerte in einer Frequenzgruppe vor der Quadrierung um eine gleiche Anzahl von Bits nach links geschoben werden und das Ergebnis somit eine größere Anzahl von gültigen Bits im oberen 32-Bit-Teil des 64-Bit-Ergebnisses enthält, oder dass das Ergebnis in dem Ergebnisregister 14 verschoben wird.

Der obere Teil 14a jedes Signalenergiewertes könnte dann in einen logarithmischen Bereich überführt werden, indem ein Rechenwerk zur Berechnung einer Logarithmusfunktion auf den jeweils oberen Teil 14a der Signalenergien angewendet wird. Das Rechenwerk müsste lediglich in der Lage sein, einen 32-Bit-Festkommadatenwert zu logarithmieren, um einen 32-Bit-Festkommadatenwert zu erhalten. Die Logarithmusfunktion, die den Wert x in den Wert y überführt, könnte $y = \log_2(x)/64$ sein, deren Funktionsverlauf in Fig. 3 dargestellt ist. Fig. 3 zeigt lediglich den Abschnitt der Logarithmusfunktion mit $x \in ]0,1[$, der für die quadrierten Signalenergiewerte im 32-Bit-Festkommadatenformat der einzig relevante ist. Der Skalierungsfaktor 1/64 stellt dabei sicher, dass selbst dann, wenn die Energiesignalwerte, die gemäß der Logarithmusfunktion von Fig. 3 logarithmiert werden, 64-Bit-Festkommawerte sind, der kleinste mögliche Wert, nämlich ein Energiesignalwert von $2^{-63}$ (1 Bit ist für das Vorzeichen zumindest reserviert), auch noch auf den möglichen Ausgangswertebereich, der sich ja bei Festkommadarstellungen von -1 bis 1 ausschließlich erstreckt, fällt.

Diese Vorgehensweise wäre allerdings nicht sehr zufriedenstellend, da in den weiteren Verarbeitungsschritten der Audiocodierung innerhalb eines Audioencoders alle Signalenergien zwingend die gleiche Skalierung aufweisen müssen und somit der die Genauigkeit erhöhende Linksshift bzw. der Skalierungsfaktor eben genau dieses gleiche Skalierungsniveau stört.

Genau hier kommt aber eine positive Eigenschaft der Logarithmierung zum Tragen. Wie oben bereits erwähnt, ist durch den vorgeschriebenen Linksshift um beispielsweise s Bitpositionen in der Frequenzlinien- bzw. Amplitudendomäne bzw. durch die Skalierung um effektiv $2^{2s}$ in der Signalenergiedomäne unter Einhaltung des besagten Sicherheitsabstands die Darstellung der Linienenergien maximal genau. Vorübergehend muss nun die Anzahl der in dieser Frequenzgruppe durchgeführten Linksshifts notiert werden, d.h. der Wert s. Wenn nun der so mit hoher Genauigkeit berechnete Signalenergiewert der in Fig. 3 gezeigten Logarithmusfunktion, die im Folgenden als LD64() bezeichnet wird, in den logarithmischen Bereich - im folgenden auch manchmal als LD64-Format bezeichnet - überführt wird, dann liegt derselbe immer noch mit maximal möglicher Genauigkeit vor. Ein Linksshift der Frequenzlinien um 1 Bit entspricht nun beispielsweise einem Linksshift um 2 Bits bei den Signalenergien im linearen, nichtlogarithmischen Bereich, d.h. nach der Quadrierung, und dies entspricht wiederum einer Addition von 2/64 im logarithmischen Bereich, da 2/64 = $\log_2(2^2)/64 = LD64(2^2)$.

Um die Originalskalierung bei den Signalenergien im LD64-Format wieder herzustellen, muss somit lediglich eine Subtraktion mit 2*s/64 erfolgen, wobei s dem vorher notierten Linksshift der Frequenzlinienwerte der Gruppe entspricht. Durch diese Subtraktion erfolgt allerdings kein Genauigkeitsverlust, da keine gültigen Bits verloren gehen bzw. herausgeschoben werden, wie dies bei einem Rechtsshift im linearen Bereich der Fall wäre. Die Signalenergien liegen auf diese Weise somit im LD64-Format, das, wie es im Folgenden noch ausgeführt wird, für die weiteren Berechnungen im Audiocodierer sowieso vorteilhaft ist, mit hoher Genauigkeit und mit gleicher Skalierung für alle Signalenergiewerte vor.

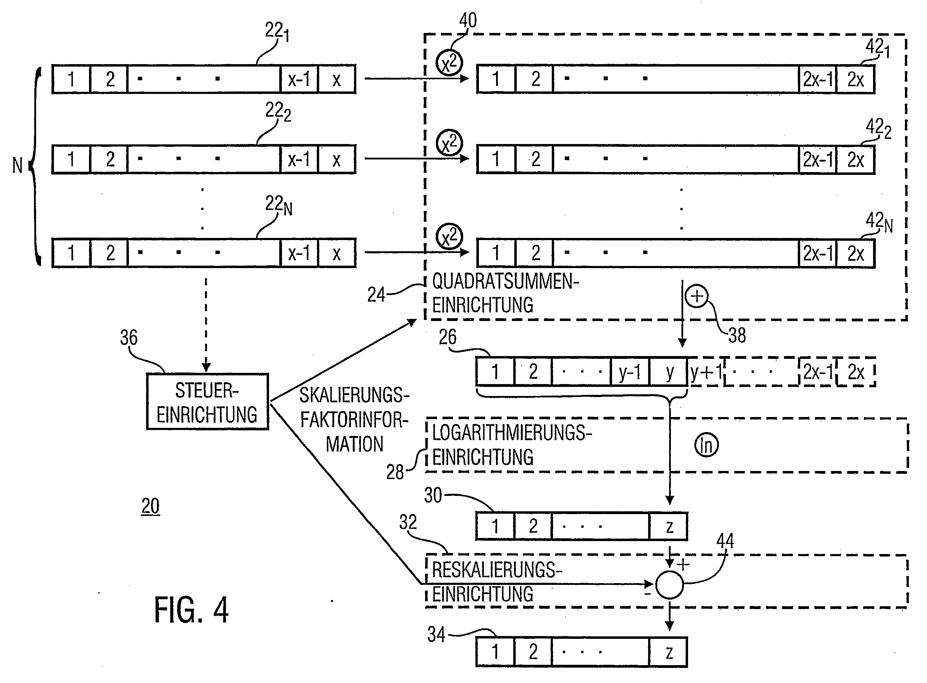

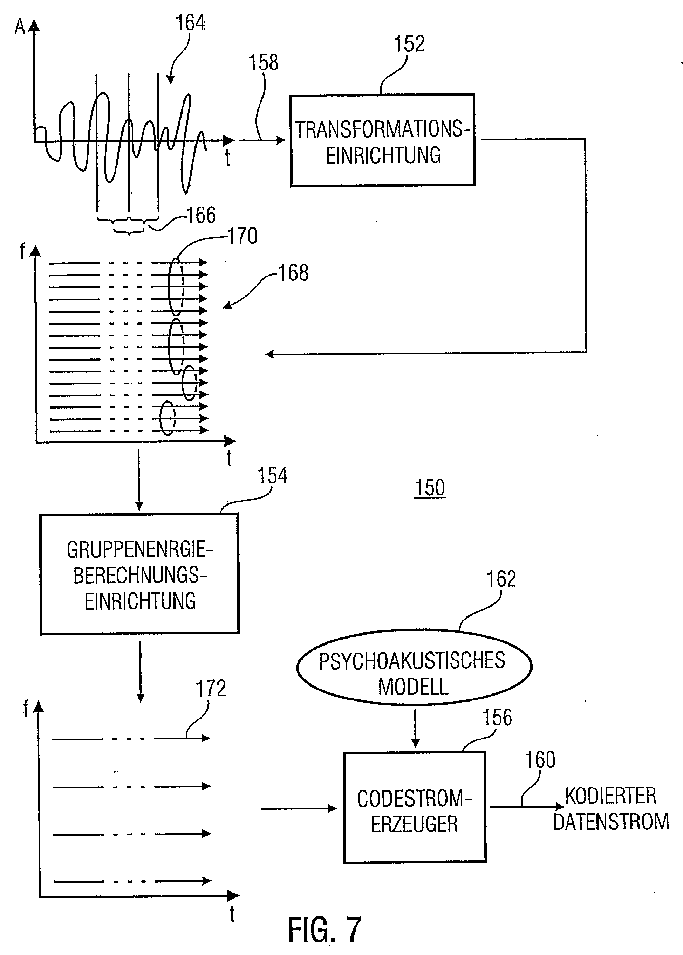

Nachdem im Vorhergehenden die Grundlagen sowie die Vorteile für die Ausführungsbeispiele der vorliegenden Erfindung erläutert worden sind, werden im Folgenden anhand der Fig. 4 - 6 Beispiele für Vorrichtungen näher erläutert, die bei einem Audiocodierer gemäß dem Ausführungsbeispiel von Fig. 7 verwendet werden können.

Fig. 4 zeigt zunächst eine schematische Darstellung einer Vorrichtung, die dazu geeignet ist, die Quadratsumme einer Gruppe von N x-Bit-Festkommawerten zu berechnen, und dabei einerseits den Dynamikbereich zu bewahren und andererseits den Hardwareaufwand in vernünftigen Grenzen zu halten. Die Vorrichtung basiert dabei auf den vorhergehenden Überlegungen.

Die Vorrichtung von Fig. 4, die allgemein mit 20 angezeigt ist, umfasst x-Bit-Register $22_1$, $22_2$ ... $22_N$ zur Speicherung der N-Bit-Festkommawerte, eine Quadratsummeneinrichtung 24 zur Ermittlung der Quadratsumme der Werte in den Registern $22_1$ - $22_N$ im nicht-logarithmischen Bereich skaliert um einen einstellbaren effektiven Skalierungsfaktor, ein erstes Ergebnisregister 26 zur Zwischenspeicherung des Ergebnisses der Quadratsummeneinrichtung 24, eine Logarithmierungseinrichtung 28 zur Überführung des Ergebnisses in dem Ergebnisregister 26 in das LD64-Format, ein zweites Ergebnisregister 30 zur Zwischenspeicherung des Ergebnisses der Logarithmierungseinrichtung 28, eine Reskalierungseinrichtung 32 zur Reskalierung bzw. zum Rückgängigmachen der Umskalierung des Ergebnisses in dem Ergebnisregister 30, ein Ausgangsregister 34 zur Zwischenspeicherung des Endergebnisses, wie es von der Reskalierungseinrichtung 32 ausgegeben wird, und eine Steuereinrichtung 36, die dafür sorgt, dass die durch die Quadratsummeneinrichtung 24 bewirkte Skalierung durch die Reskalierung in der Reskalierungseinrichtung 32 wieder rückgängig gemacht wird, und die ferner den gemeinsamen Skalierungsfaktor ermittelt.

Nachdem nun die einzelnen Komponenten der Vorrichtung 20 beschrieben worden sind, wird im Folgenden deren Zusammenspiel bei der Quadratsummenbildung beschrieben, wobei die Interaktion jeweils durch Pfeile angedeutet ist.

Wie bereits erwähnt, liegen die der Quadratsumme zu unterziehenden Werte zunächst in den Registern $22_1$ - $22_N$ im x-Bit-Festkommadatenformat vor. Wie es ebenfalls bereits im Vorhergehenden beschrieben worden ist, können diese Werte, die Frequenzlinienwerte sein können, in der Anzahl ihrer gültigen Bits deutlich voneinander variieren.

Die Quadratsummeneinrichtung 24 erhält nun diese Werte in den Registern $22_1$ - $22_N$, um dieselben in einer Art und Weise einer Quadratsummenbildung zu unterziehen, so dass am Ende in dem Register 26 die Quadratsumme der Werte in den Registern $22_1$ - $22_N$ in einer Festkommadarstellung vorhanden ist, und zwar skaliert um einen effektiven Skalierungsfaktor, der durch die Steuereinrichtung 36 zumindest mittelbar einstellbar ist. Dabei ist es nicht unbedingt erforderlich, dass das Ergebnisregister 26, in welches die Quadratsummeneinrichtung 24 das Quadratsummenergebnis schreibt, 2x Bits aufweist. Es genügt vielmehr, wie es durch teilweise Strichliniendarstellung des Registers 26 angedeutet ist, wenn die Quadratsummeneinrichtung 24 eine y-Bit-Festkommadarstellung des Ergebnisses liefert, wobei hier vorzugsweise y = x gilt.

Zunächst wird beschrieben, wie die Quadratsummeneinrichtung 24 die Skalierungsfaktorinformationen von der Steuereinrichtung 36 berücksichtigen kann, um das skalierte Ergebnis in dem Register 26 auszugeben, und auf welche Weise die Steuereinrichtung 36 die Skalierungsfaktorinformationen bzw. den effektiven Skalierungsfaktor, mit welchem das Ergebnis in dem Ergebnisregister 26 skaliert ist, so bestimmen kann, dass keine gültigen Bits durch Überlauf verloren gehen.

Eine Möglichkeit besteht nun entsprechend der vorhergehenden Beschreibung darin, dass die Steuereinrichtung 36 die Inhalte der Register $22_1$ - $22_N$ analysiert, um den effektiven Skalierungswert vorab derart zu bestimmen, dass durch die anschließende Aufsummation der Quadrate der Werte in den Registern $22_1$ - $22_N$ kein Überlauf auftreten kann. Dies würde passieren, wenn in einem Additionsrechenwerk der Quadratsummeneinrichtung 24, das in Fig. 4 mit 38 angedeutet ist, keine Überlaufbits vorhanden wären bzw. spätestens dann, wenn der "übergelaufene" Quadrat- bzw. Energiewert in eine Speicherzelle geschrieben wird, die mit Sicherheit keine Überlaufbits bietet, wie es bei dem Register 26 beispielsweise der Fall ist. Die Steuereinrichtung 36 stellt deshalb abhängig von Anzahl N und der maximalen Anzahl von freien Bits in den Registern $22_1$ - $22_N$ bzw. dem Maximum aus x minus Anzahl der gültigen Stellen der einzelnen Werte in den Registern $22_1$ - $22_N$ die Skalierungsfaktorinformationen derart ein, dass bei Ausgabe in das Register 26 kein Überlauf eintritt bzw. das Ergebnis nicht den Wertebereich von -1 bis 1, ausschließlich, verlässt.

Insbesondere ist es möglich, dass die Steuereinrichtung 36, wie im Vorhergehenden erwähnt, den effektiven Skalierungsfaktor, mit welchem das Ergebnis in dem Register 26 skaliert ist, über einen gemeinsamen Skalierungsfaktor einstellt, mit welchem die Quadratsummeneinrichtung 24 die Registerinhalte $22_1$ - $22_N$ gleich zu Beginn, d.h. noch vor der Quadration 40, skaliert. Insbesondere kann der gemeinsame Skalierungsfaktor, wie im Vorhergehenden beschrieben, einer Potenz von 2 entsprechen, so dass die Vorabskalierung der Werte in den Registern $22_1$ - $22_N$ durch eine Linksschiebeoperation erzielt werden kann. In diesem Fall wäre es auch, wie im Vorhergehenden erwähnt, nicht erforderlich, dass die Quadratsummeneinrichtung 24 die Zwischenergebnisse der Quadrierungen 40 der einzelnen skalierten Registerinhalte in einem 2x-Festkommadatenformat addiert 38, um das Ergebnis in dem Ergebnisregister 26 auszugeben, sondern vielmehr benötigte die Quadratsummeneinrichtung 24 lediglich eine y-Bit-Festkommadarstellung der Quadrie-rungszwischenergebnisse $42_1$ ... $42_N$. Die Summation 38 über alle Quadrationszwischenergebnisse $42_1$ - $42_{N^-}$ ergibt dann das Endergebnis der Quadratsummeneinrichtung 24 in dem Register 26.

Eine alternative, nicht erfindungsgemäße Möglichkeit zur Skalierungsfaktorbestimmung und -berücksichtigung bestünde darin, dass die Quadratsummeneinrichtung 24 zunächst die Registerinhalte $22_1$ - $22_N$ jeweils einzeln der Quadrierung 40 unterzieht, um Zwischenergebnisse im 2x-Festkommadatenformat $42_1$ - $42_N$ zu erhalten. Diese würde die Quadratsummeneinrichtung 24 dann der Summation 38 unterziehen. Das entstehende 2x-Festkommaquadratsummenergebnis würde von der Steuereinrichtung 36 zunächst auf die Anzahl der unbenutzten Bits bzw. die Differenz zwischen 2x und die Anzahl der gültigen Stellen hin untersucht werden, um dementsprechend einen Linksshift bzw. eine Linksschiebeoperation um eine entsprechende Anzahl von Bits an diesem 2x-Bit-Quadratsummenergebnis durch die Quadratsummeneinrichtung 24 vornehmen zu lassen, bevor letztere das Ergebnis in das Ergebnisregister 26 einträgt. Der Nachteil bei dieser Vorgehensweise gegenüber der zuerst beschriebenen besteht darin, dass der interne Rechenaufwand in der Quadratsummeneinrichtung 24 erhöht wäre, da Werte $42_1$ - $42_N$ mit einer Wortbreite von 2x verarbeitet werden müssten, insbesondere der Summation 38 unterzogen werden müssen. Hierzu ist entweder ein Additionsrechenwerk mit erhöhter Leistungsfähigkeit notwendig oder aber ein y-Bit-Festkommadatenformat-Additionsrechenwerk mit zugeordnetem überlaufbit muss entsprechend öfter angesteuert werden. Bei dieser Möglichkeit würde also die Quadratsummeneinrichtung 24 die Werte in den Registern $22_1$ - $22_N$ zunächst einzeln quadrieren und die 2x-Bit-Fest-kommaquadratwerte $42_1$ - $42_N$ aufsummieren 38, um erst danach das Ergebnis gemäß den Skalierungsfaktorinformationen der Steuereinrichtung 36 zu skalieren und an das Register 26 auszugeben.

Bei einem Ausführungsbeispiel, das vorzugsweise mit x = 24 Bits implementiert ist, ist das Register 26 y = 2x Stellen lang. Bei einem anderen Ausführungsbeispiel, das vorzugsweise mit x = 32 Bits implementiert ist, wird jedoch bereits beim Quadrieren in einer Einrichtung $42_1$ - $42_N$ gewissermaßen bereits während der Quadrierung oder nach der Quadrierung aber vor dem Einspeichern in das Register eine Stellenreduktion auf x Stellen durchgeführt. Die Aufsummation wird dann mit einer Wortbreite von x Bits durchgeführt. Hier hat das Register 26 also nur y = x Stellen. Die Logarithmierungseinrichtung kann dann vorzugsweise ebenfalls x Stellen haben.

Mit Hilfe des effektiven Skalierungsfaktors kann die Anzahl an gültigen Bits in dem Ergebnisregister 26 nahezu optimal eingestellt werden. Die Logarithmierungseinrichtung 28 empfängt nun die y-Bit-Festkommadarstellung aus dem Register 26 unter gegebenenfalls Unberücksichtigt-Lassen der übrigen Bitpositionen höherer Genauigkeit und unterzieht dieselbe der im Vorhergehenden Bezug nehmend auf Fig. 3 erläuterten LD64-Formatumwandlung, um das Ergebnis in das Register 30 im z-Bit-Festkommadatenformat einzutragen, wobei vorzugsweise z = y gilt, ebenso wie vorzugsweise y = x gilt.

Das Ergebnis in dem Ergebnisregister 30 stellt eine skalierte logarithmische Darstellung der Quadratsumme der Werte in den Registern $22_1$ - $22_N$ dar. Die Reskalierungseinrichtung 32 macht die Skalierung nun wiederum rückgängig, indem sie von dem skalierten Wert in dem Register 30 einen Korrekturwert abzieht 44, den sie von der Steuereinrichtung 36 erhält. In dem Fall des LD64-Formats beträgt der Korrekturwert, wie im Vorhergehenden erwähnt, LD69(s), wobei s der effektive Skalierungswert sei, mit welchem die Quadratsumme in dem Ergebnisregister 26 skaliert ist.

Das Ergebnis gibt die Reskalierungseinrichtung 32 dann im Register 34 im Festkommadatenformat aus.

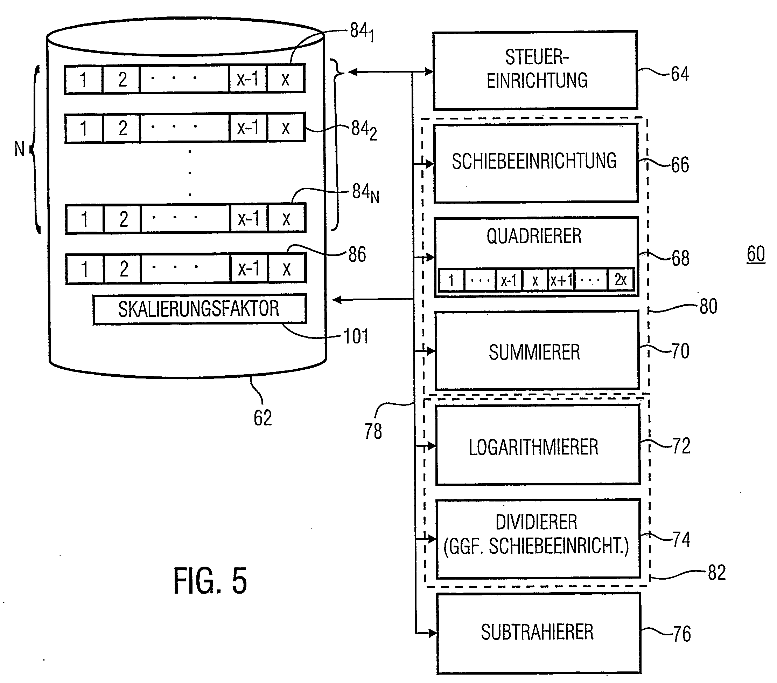

Bezug nehmend auf Fig. 4 wurde ein Vorrichtung zur Quadratsummenberechnung zunächst eher grob in seiner Wirkweise beschrieben, ohne näher auf eine mögliche Hardwareimplementierung einzugehen. Fig. 5 zeigt eine mögliche Implementierung der Vorrichtung von Fig. 4 etwas detaillierter. Die Vorrichtung von Fig. 5, die allgemein mit 60 angezeigt ist, umfasst einen Speicher 62, eine Steuereinrichtung 64, eine Schiebeeinrichtung 66, einen Quadrierer 68, einen Summierer 70, einen Logarithmierer 72, einen Dividierer 74 und einen Subtrahierer 76. All die Module 62 - 76 sind kommunikativ miteinander über beispielsweise einen Bus oder aber eine Programmschnittstelle 78 miteinander verbunden. Die Einrichtungen 66 - 76 können in Hardware implementiert sein oder können teileise aber auch entsprechende Programmcodes sein, die von der Steuereinrichtung 64 ausgeführt werden, um die entsprechenden Aufgaben zu erfüllen. Die Module 66 - 76 müssen jeweils nur in der Lage sein, x-Bit-Festkommadatenformatoperanden zu verarbeiten. Unter den Modulen 66 - 76 bilden die Module 66 - 70 eine Quadratsummeneinrichtung 80, während der Logarithmierer 72 und der Dividierer 74 zusammen eine Logarithmierungseinrichtung 82 bilden.

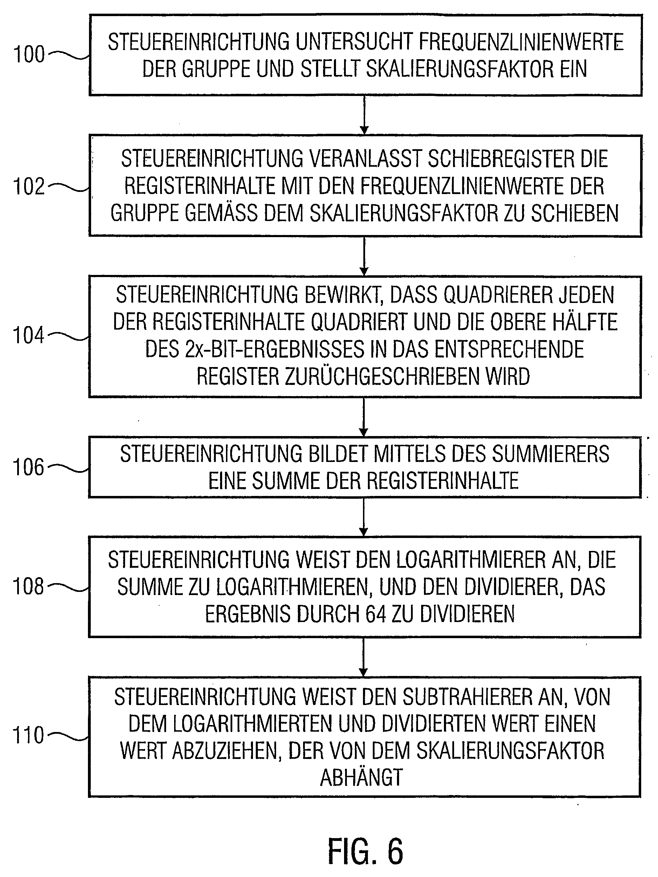

Die Steuereinrichtung 64 ist beispielsweise programmgesteuert und bewirkt, dass eine Quadratsummenbildung von Werten durchgeführt wird, die in dem Speicher 62 in x-Bit-Speicherplätzen $84_1$ ... $84_N$ im x-Bit-Festkommadatenformat abgelegt sind. Die genaue Funktionsweise der Steuereinrichtung 64 wird Bezug nehmend auf Fig. 6 erläutert. Dabei wird insbesondere davon ausgegangen, dass es sich bei den x-Bit-Festkommawerten in den Speicherplätzen $84_1$ - $84_N$ um Frequenzlinienwerte einer Frequenzgruppe handelt.

Zunächst untersucht die Steuereinrichtung 100 die Frequenzlinienwerte der Gruppe in den Speicherplätzen $84_1$ - $84_N$ und stellt einen gemeinsamen Skalierungsfaktor ein. Die Einstellung im Schritt 100 erfolgt, wie im Vorhergehenden erwähnt, basierend auf der Anzahl N und der minimalen Anzahl ungenutzter Bitpositionen in den Speicherplätzen $84_1$ - $84_N$. Insbesondere stellt sie den gemeinsamen Skalierungsfaktor auf eine Potenz von 2 ein, wie z.B. $2^s$. Alternativ stellt die Steuereinrichtung 64 einen Schiebewert s ein, der dem gemeinsamen Skalierungsfaktor $2^s$ entspricht. Den Wert s oder $2^s$ trägt die Steuereinrichtung zur Zwischenspeicherung in ein internes oder externes Register 101 ein.

In einem darauffolgenden Schritt 102 veranlasst die Steuereinrichtung 64 die Schiebeeinrichtung 66, die Inhalte der Speicherplätze $84_1$ - $84_N$ mit den Frequenzlinienwerten der Gruppe gemäß dem gemeinsamen Skalierungsfaktor bzw. dem Schiebewert um s Bitpositionen nach links zu schieben.

In einem Schritt 104 bewirkt die Steuereinrichtung 64 dann, dass der Quadrierer 68 jeden Wert in den Speicherplätzen $84_1$ - $84_N$ quadriert und die obere Hälfte des 2x-Bit-Ergebnisses in den entsprechenden Speicherplatz $84_1$ - $84_N$ zurückschreibt. Der Quadrierer 68 ist beispielsweise ein Multiplizierer, wobei die Steuereinrichtung 104 in beide x-Bit-Multiplikandenregister des Multiplizierers den jeweils zu quadrierenden Wert aus einem der Speicherplätze $84_1$ - $84_N$ schreibt. Der Quadrierer kann intern beispielsweise ein 2x-Bit-Ergebnisregister umfassen, wobei jedoch die Steuereinrichtung 64 dafür sorgt, dass nur die obere Hälfte, d.h. ein x-Bit-Festkommaquadrierungswert, in den entsprechenden Speicherplatz $84_1$ - $84_N$ zurückgeschrieben wird. Alternativ berechnet der Quadrier im vorhinein lediglich eine x-Bit-Darstellung und besitzt deshalb auch nur ein x-Bit-Ausgangsregister.

In einem Schritt 106 bildet daraufhin die Steuereinrichtung 64 mittels des Summierers 70 eine Summe über alle Inhalte der Speicherpositionen $84_1$ - $84_N$. Beispielsweise beginnt er mit der Summe der beiden ersten Werte und schreibt das Ergebnis in ein x-Bit-Summenregister 86 im x-Bit-Festkommadatenformat. Danach könnte die Steuereinrichtung 64 den Summierer 70 dazu verwenden, den Wert mit der Speicherposition 86 mit den nachfolgenden Werten nacheinander zu addieren und jeweils den bisherigen Wert in dem Speicherplatz 86 mit der entstehenden Summe zu überschreiben. Alternativ könnte die Steuereinrichtung 64 dafür sorgen, dass die Summe in eine der Speicherpositionen $84_1$ - $84_N$ geschrieben und dort akkumuliert wird.

In einem Schritt 108 weist die Steuereinrichtung 64 dann den Logarithmierer 72 an, die Summe in dem Speicherplatz 86 zu logarithmieren, und daraufhin den Dividierer 74, das Ergebnis durch 64 zu dividieren. Das Zwischenergebnis des Logarithmierers 72 wird dabei beispielsweise zurück in die Speicherposition 86 geschrieben, ebenso wie beispielsweise das Ergebnis des Dividierers 74. Falls der Divisor eine Zweierpotenz ist, ist der Dividierer als einfache Schiebeeinrichtung ausgeführt.

Nach dem Schritt 108 steht folglich in der Speicherposition 86 eine skalierte logarithmierte Darstellung der Quadratsumme. In einem Schritt 110 weist deshalb die Steuereinrichtung den Subtrahierer 76 an, von dem logarithmierten und dividierten Wert in der Speicherposition 86 einen Wert abzuziehen, der von dem im Zwischenspeicher 101 gespeicherten Skalierungsfaktor s abhängt, nämlich den Wert 2*s/64.

Im Folgenden wird ein Ausführungsbeispiel für einen Audiocodierer beschrieben, bei dem eine Vorrichtung gemäß der Ausführungsbeispiele von Fig. 4 bis 6 implementiert ist.

Der Audiocodierer von Fig. 7, der allgemein mit 150 angezeigt ist, umfasst eine Transformationseinrichtung 152, eine Gruppenenergieberechnungseinrichtung 154 und einen Codestromerzeuger 156, die in Reihe zwischen einen Eingang 158 und einen Ausgang 160 des Codierers 150 geschaltet sind. Der Codestromerzeuger 156 verwendet ein psychoakustisches Modell 162, um beispielsweise aus einem an dem Eingang 158 anliegenden und zu codierenden Audiosignal 164 Irrelevanzinformationen auszusondern, dessen Entfernung nicht oder kaum die Hörqualität des codierten Datenstroms beeinträchtigt, der am Ausgang 160 ausgegeben wird. Obwohl es in Fig. 7 nicht gezeigt ist, könnte es sein, dass der Codestromerzeuger 156 über einen Rückkopplungspfad mit der Transformationseinrichtung 152 oder der Gruppenenergieberechnungseinrichtung 154 gekoppelt ist.

Das am Eingang 158 anliegende Audiosignal 164 liegt beispielsweise als eine Folge von Audioabtastwerten vor, die mit einer vorbestimmten Abtastfrequenz abgetastet wurden. Das Audiosignal 164 kann beispielsweise in einem PCM-Format vorliegen. Bei 164 ist das Audiosignal als gegen die Zeit t aufgetragen dargestellt, wobei die vertikale Achse die Amplitude A in willkürlichen Einheiten darstellt.

Die Transformationseinrichtung 152 transformiert dann das Audiosignal 164 von einem Zeitbereich in einen Spektralbereich, indem dieselbe das Audiosignal 164 in seine spektralen Bestandteile zerlegt. Insbesondere kann die Transformationseinrichtung 152 beispielsweise aus einer Analysefilterbank mit 32 Bandpassfiltern bestehen. Genauer ausgedrückt zerlegt die Transformationseinrichtung 152 das Audiosignal 164 abschnittsweise in spektrale Komponenten. Die Abschnitte bzw. Frames 166, für die die spektrale Zerlegung durchgeführt wird, überlappen sich beispielsweise um 50 % in der Zeit. Für jede spektrale Komponente entsteht somit für jedes aufeinander folgende Frame ein Spektralwert bzw. Frequenzlinienwert, der in dem durch die Transformationseinrichtung 152 erzeugten Spektrogramm 168 durch Punkte veranschaulicht ist. Auf diese Weise entstehen pro spektraler Komponente eine Frequenzlinie aus einer Folge von Frequenzlinienwerten, wobei die Frequenzlinien bei 168 mit waagerechten Pfeilen angedeutet sind, die lediglich für die drei angedeuteten Frames 166 sichtbar in Frequenzlinienwerte aufgegliedert sind. In dem Spektrogramm 168 ist eine willkürliche Anzahl von Frequenzlinien entlang der spektralen Achse bzw. der Frequenzachse f angeordnet, wobei jedoch die tatsächliche Anzahl von Frequenzlinien größer sein wird.

Basierend auf dem so entstehenden Spektrogramm 168 wird der Codestromerzeuger 156 den codierten Datenstrom erzeugen. Jedoch benötigt der Codestromerzeuger 156 hierfür nicht oder nicht immer die spektrale Zerlegung in alle Spektralkomponenten. Vielmehr sind nach psychoakustischen Gesichtspunkten die Frequenzlinien in Gruppen 170 eingeteilt, wie es durch Kreise angedeutet ist.

Insbesondere benötigt nun der Codestromerzeuger 156 zur Codestromerzeugung für jede Gruppe 170 von Frequenzlinien den zugehörigen Signalenergiewert, d.h. die Quadratsumme der einzelnen Amplitudenwerte, d.h. die Quadratsumme der Frequenzlinienwerte, und das für jedes der Frames 166.

Diese Berechnung wird durch die Gruppenenergieberechnungseinrichtung 154 durchgeführt. Sie berechnet für jede Gruppe 170 von Frequenzlinien die Signalenergie als die Quadratsumme der Frequenzlinien, wobei die Gruppenenergieberechnungseinrichtung 154 beispielsweise wie in Fig. 4 und 5 gezeigt aufgebaut ist bzw. wie in Fig. 4 - 6 beschrieben agiert. Das Ergebnis der Gruppenenergieberechnungseinrichtung 154 sind Folgen 172 von Signalenergiewerten, nämlich eine Folge 172 pro Gruppe 170. Die Signalenergiefolgen 172 weisen folglich pro Frame 166 einen Signalenergiewert auf, die wiederum mit einem Punkt entlang den Pfeilen 172 veranschaulicht sind.

Basierend auf diesen Folgen 172 von Signalenergiewerten erzeugt dann der Codestromerzeuger 156 auf der Basis des psychoakustischen Modells 162 den codierten Datenstrom 160. Dabei besteht ein Vorteil bei der Weiterverarbeitung der Signalenergiewerte in der Einrichtung 156 nicht nur darin, dass die Werte in einem Festkommadatenformat mit der gleichen Anzahl an Bits vorliegen, wie die Frequenzlinienwerte vorlagen, sondern auch darin, dass die Werte im logarithmischen Bereich vorliegen, da es dieser Bereich ermöglicht Multiplikationen, Exponentationen und Divisionen einfacher durchzuführen, da diese Rechenoperationen im logarithmischen Bereich in einfachere Additionen/Subtraktionen und Multiplikationen/Divisionen übergehen.

Um dies zu veranschaulichen, werde beispielsweise der Fall betrachtet, dass der Kodierer von Fig. 7 ein MPEG-Datenstrom ausgebe.

Der Audiocodierer von Fig. 7 ist beispielsweise ein MPEG AAC-Codierer. In diesem Fall umfasst der Codestromerzeuger 156 ein TNS (temporal noise shaping) Modul, in welchem der Codestromerzeuger 156 eine effiziente Berechnung des energiegewichteten Spektrums vornimmt. Insbesondere führt das TNS-Modul eine Berechnung mit den Signalenergien SE der Art $x = 1/\sqrt{SE}$ durch. Dies kann mit den Signalenergien im logarithmischen Format LD64, wie es von der Gruppenenergieberechnungseinrichtung 154 verwendet wird, einfacher durchgeführt werden. Das TNS-Modul berechnet X einfach zu LD64$^{-1}$ (-LD64_SE >> 1), wobei a >> b eine Rechtsschiebeoperation des linksstehenden Operanden a um die rechtsstehende Anzahl b von Bits anzeige, während LD64$^{-1}$() eine zu der Logarithmusfunktion LD64() inverse Funktion sei, d.h. eine Umkehrfunktion der LD64-Funktion, und LD64_SE der Signalenergiewert im logarithmischen LD64-Format sei, wie es von der Gruppenenergieberechnungseinrichtung 154 ausgegeben wird. ">> 1" bezeichnet also einen Rechtsshift um 1 Bit, was einer Division durch 2 entspricht. Die Division durch 2 entspricht, da sie im logarithmischen Bereich durchgeführt wird, einer Quadratwurzel im linearen Bereich. Das Minuszeichen entspricht der Umkehrfunktion 1/x im linearen Bereich. Die Berechnung der LD64$^{-1}$-Funktion kann mit geringerer Komplexität realisiert werden als die Wurzelbildung und Inversion des Ergebnisses, wie sie erforderlich wären, wenn die Signalenergien im linearen Bereich dem Codestromerzeuger 156 zugeführt würden.

Der Codestromerzeuger 156 könnte auch einen codierten MPEG-4 AAC-Datenstrom erzeugen und würden dann ein PNS- (Perceptual Noise Substitution) Modul umfassen. Das PNS-Modul berechnet intern den Abstand zwischen Mithörschwelle und Signalenergie in einer Frequenzgruppe 170. Insbesondere entscheidet das PNS-Modul anhand des Abstands zwischen Mithörschwelle und Signalenergie, ob eine Rauschsubstitution durchgeführt werden kann bzw. soll. Die größere Dynamik und damit verbundene Genauigkeit der logarithmischen Darstellung der Signalenergien, wie sie von der Gruppenenergieberechnungseinrichtung 154 ausgegeben werden, und Mithörschwellen, die in dem Codestromerzeuger 156 ebenfalls in der logarithmischen Darstellung LD64 bereitgestellt werden, trägt hier einen entscheidenden Teil zur korrekten PNS-Entscheidung bei. Insbesondere tritt in einer Kohärenzfunktion im PNS-Modul eine Division und eine Wurzelberechnung in Form von $Y = (SE1 / \sqrt{SE2 \cdot SE3})$ auf, wobei SE1, SE2 und SE3 Signalenergien sind, die von der Gruppenenergieberechnungseinrichtung 154 ausgegeben werden. Durch die logarithmische Darstellung der Signalenergien wird diese Berechnung sehr vereinfacht und beschleunigt. Insbesondere kann das PNS-Modul in dem Codestromerzeuger 156 die Berechnung von LD64_Y, also von Y im LD64-Format, durchführen, indem sie folgendes berechnet:

$$\texttt{LD64\_Y = LD64\_SE1 - ((LD64\_SE2 + LD64\_SE3) >> 1),}$$

wobei LD64_ SE# die logarithmische Darstellung des jeweiligen Signalenergiewertes SE# sei, wie sie von der Gruppenenergieberechnungseinrichtung 154 ausgegeben wird.

Der Codestromerzeuger 156 kann beispielsweise auch ein Mitte-Seite-Stereo-Modul aufweisen, das eine Mitte-Seite-Codierungsentscheidung durchführt. In diesem MS-Modul werden für die Entscheidung, ob Mitte-Seite- (MS-) Codierung verwendet werden soll oder nicht, eine Vielzahl von Divisionen berechnet, nämlich von Mithörschwelle zu Signalenergie. Diese Divisionen gehen durch die Verwendung des LD64-Formats, wie es von der Gruppenenergieberechnungseinrichtung 154 ausgegeben wird, in einfache Subtraktionen über. Die Schwellwerte, ab denen eine MS-Codierung verwendet werden soll, sind konstant und können somit schon im Quellcode in den logarithmischen Bereich überführt sein, wodurch zur Programmlaufzeit keine weitere Rechenzeit benötigt wird. Dies trifft für viele weitere Konstanten zu, die im modifizierten Code im Zusammenhang mit LD64-Berechnungen verwendet werden. Obiges gilt insbesondere auch für das Intensitäts-Stereo-Modul eines MPEG Layer-3 oder AAC-Encoders.

Der Codestromerzeuger 156 kann ferner einen Skalenfaktorschätzer aufweisen, der eine Berechnung einer Lautheit vornimmt. Im Skalenfaktorschätzer, der beispielsweise in einem Quantisierungsmodul des Codestromerzeugers 156 angeordnet ist, erfolgt eine Berechnung der vierten Wurzel der Mithörschwellen, d.h. eine Lautheitsberechnung. Durch Darstellung der Mithörschwelle mittels eines logarithmischen Datenformats, nämlich des LD64, kann die Berechnung dieser vierten Wurzel sehr effizient durch einfaches Rechtsschieben der logarithmischen Mittelschwellen um 2 Bits erfolgen. Der umgekehrte Schritt, also eine Potenzierung um 4, kann ebenfalls sehr einfach über Linksschieben um 2 Bitstellen erfolgen.

Im Skalenfaktorschätzer des Codestromerzeugers 156 kann ferner beispielsweise eine Berechnung der Skalenfaktoren SCF, der einen Teil der Quantisierungsschrittweite bildet, aus den modifizierten Mithörschwellen MHS und den Signalenergien SE berechnet werden. Die Berechnung beinhaltet einen Rechenschritt der Art SCF = log(k*MHS/SE), wobei log() einen Zehnerlogarithmus bedeute und k eine konstante sei. Diese Berechnung kann durch die Verwendung des LD64-Formats und einer dementsprechenden Umformung der Originalformel sehr elegant und effizient gelöst werden. Insbesondere würde der Skalenfaktorschätzer die Berechnung folgendermaßen vornehmen: SCF = log(k) + log2*64*(LD64_MHS - LD64_SE).

Obige Beispiele für mögliche Module innerhalb des Codestromerzeugers 156 zeigen, dass die Verwendung des logarithmischen Datenformats LD64 eine Effizienzsteigerung auf Festkommaprozessoren ermöglicht. Das logarithmische Datenformat LD64 ermöglicht für viele Fälle erst, dass ein Audiocodec mit hoher Audioqualität auf diesen Plattformen implementiert werden kann, wenn eine bestimmte Audioqualität nicht unterschritten werden soll.

Insbesondere zeigten obige Beispiele für mögliche Module in dem Codestromerzeuger 156, dass, da in der Verarbeitung der Signalenergien und Mithörschwellen die meisten Rechenschritte mittels einer Division oder Multiplikation durchgeführt werden, die Darstellung der Signalenergien, Mithörschwellen und weiterer Energiewerte in einem logarithmischen Datenformat äußerst zweckdienlich ist. Eine Division geht dadurch in eine Subtraktion und eine Multiplikation in eine Addition über, was eine effiziente Darstellung und Verarbeitung der Signalenergien und Mithörschwellen in einem Audiocoder mittels des dargestellten logarithmischen Datenformats bedeutet. Die Signalenergien im linearen Bereich, d.h. im nicht-logarithmischen Bereich, werden im Fractional-Festkommadatenformat dargestellt, das einen Wertebereich von -1,0 bis +0,99999... aufweist.

Bei den vorhergehenden Ausführungsbeispielen wurde zur Logarithmusbildung ein Logarithmus zur Basis 2, der Logarithmus Dualis LD, verwendet. Bei einem Logarithmus Dualis entspricht ein Signalenergiewert von 0,25 im linearen Bereich einem LD-Wert von -2. Einem Signalenergiewert von 0,3 im linearen Bereich entspricht ein LD-Wert von - 1,7369656. Da auf einem Festkommaprozessor in der Regel entweder ganzzahlige Werte, nämlich Integer, oder aber Fraktionalwerte, aber üblicherweise keine Mischwerte dargestellt werden können, wurden in den vorhergehenden Ausführungsbeispielen die LD-Werte im Rahmen des LD64-Formats so skaliert, dass nur Fraktionalwerte zustande kommen. Eine andere Möglichkeit bestünde natürlich darin, die Skalierung so zu wählen, dass nur ganzzahlige Werte zustande kommen. Insbesondere wurde eine Skalierung mit einem Faktor 1/64 gewählt, da dieser Faktor für alle Wortbreiten bis zu 64 Bits anwendbar ist und somit auch die gebräuchlichen Wortbreiten 48 Bit und 32 Bit abdeckt. Die Berechnung des Logarithmusduales skaliert mit 1/64, d.h. des LD64-Formats, erfolgt nach der Formel y = $\log_2(x)/64$ - LD64(x). Unter verzicht auf die erweiterte Portabilität könnte der Faktor natürlich auch erhöht werden, nämlich bis zu 1/y, wobei y die Anzahl der Bits der nicht-logarithmierten skalierten Quadratsumme sei.

Fig. 3 zeigt den Graphen der Logarithmusfunktion. Es ist hierbei die Charakteristik der Logarithmusfunktion zu erkennen, die für kleinere, also in einer Festkommadarstellung eigentlich ungenauere, Eingangswerte x (näher an 0,0) eine größere Anzahl von Ausgangswerten y, also eine feinere Auflösung, im logarithmischen Bereich bietet, die, weil sie betragsmäßig größer, d.h. näher an -1,0, sind, somit in einer Festkommadarstellung genauer sind. Ein Genauigkeitsverlust bei der Berechnung der Signalenergien vor dem Übergang in den logarithmischen Bereich wurde gemäß obiger Ausführungsbeispiele durch den gemeinsamen Skalierungsfaktor bzw. den gemeinsamen Schiebewert vor der Quadrierung vermieden.

Das Ausführungsbeispiel von Fig. 7 stellt somit einen Codierer dar, der ein skaliertes oder auch nicht-skaliertes logarithmisches Datenformat im psychoakustischen Modell und/oder im Quantisierungsmodul zur Darstellung und Verarbeitung der Signalenergien und Mithörschwellen verwendet. Es wird jedoch darauf hingewiesen, dass die vorhergehende Beschreibung des Logarithmus Dualis und der Skalierung mit 1/64 nur beispielhaft war. Durch die logarithmische Darstellung wird in jedem Fall eine schnellere Ausführung einer Vielzahl von Berechnungen, wie z.B. im Mitte-Seite-Entscheidungsmodul und dem Skalenfaktorschätzer des Quantisierungsmoduls, erreicht, da wie erwähnt die dort ursprünglichen vorhandenen Divisionen durch die Verwendung des logarithmischen Formats in einfache Subtraktionen übergehen, die auf einem Festkommaprozessor um ein Vielfaches schneller durchzuführen sind. Dasselbe gilt für Wurzelberechnungen, wie z.B. die Berechnung einer Quadratwurzel, einer vierten Wurzel usw., die in einfache Rechtsshifts übergehen. Der Rechenaufwand, der für den Übergang in den logarithmischen Bereich aufgewendet werden muss, wird durch den Geschwindigkeitsgewinn in den späteren Schritten des Algorithmus bei weitem wieder Wett gemacht. Die Vorteile obiger Ausführungsbeispiele liegen also insbesondere in der höheren Genauigkeit der logarithmisch dargestellten Werte sowie in der höheren Verarbeitungsgeschwindigkeit bei Verwendung der logarithmischen Darstellung.

Nach den vorhergehenden Ausführungsbeispielen wurde eine Logarithmierungsfunktion verwendet, bei der eine Skalierung um 1/64 vorgenommen worden ist. Dieser Faktor ist sinnvoll, falls ein und dieselbe Codierung auf verschiedenen Plattformen mit unterschiedlichen Festkommadatenformaten laufen soll. Es ist aber ferner möglich, dass der Faktor in der Logarithmusfunktion lediglich größer als x, d.h. größer als die Anzahl der Bits der Werte ist, die der Quadratsummierung zugeführt werden.

Insbesondere wird darauf hingewiesen, dass abhängig von den Gegebenheiten das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

**Patentansprüche**

1. Audiocodierer mit
   einer in einem Festkommaprozessor implementierten Vorrichtung zur Berechnung von Spektralgruppenenergien eines Audiosignals mit
   einer Transformationseinrichtung (152) zum Zerlegen des Audiosignals (164) in Frames in einem Zeitbereich und zum Transformieren des Audiosignals in jedem Frame vom Zeitbereich in einen Spektralbereich, um für jedes Frame eine Gruppe von spektralen Komponenten zu erhalten, von denen jede einen Amplitudenwert in einer nicht-logarithmierten x-Bit-Darstellung aufweist, so dass Folgen von Amplitudenwerten entstehen, die in unterschiedliche Spektralgruppen (170) eingeteilt sind;
   einer Gruppenenergieberechnungseinrichtung (24; 80) zum Berechnen einer Spektralgruppenenergie für jede Spektralgruppe im jeweiligen Frame als die Quadratsumme der Amplitudenwerte ($22_1$-$22_N$; $84_1$-$84_N$), wobei die Gruppenenergieberechnungseinrichtung (24; 80) aufweist:

   eine Steuereinrichtung (36; 64) zum Einstellen eines jeweiligen Skalierungsfaktors für jede Spektralgruppe abhängig von der Anzahl (N) der Amplitudenwerte der jeweiligen Spektralgruppe und der kleinsten Anzahl von ungenutzen Bitpositionen in den x-Bit-Darstellungen der Amplitudenwerte der jeweiligen Spektralgruppe,
   eine Skalierungseinrichtung (66) zum Skalieren der nicht-logarithmierten x-Bit-Darstellung ($84_1$-$84_N$) jedes Amplitudenwerts für jede Spektralgruppe mit dem jeweiligen Skalierungsfaktor, um skalierte Amplitudenwerte in einer x-Bit-Darstellung zu erhalten,
   eine Quadrierungseinrichtung (68) zum Quadrieren der skalierten Amplitudenwerte in der x-Bit-Darstellung, um skalierte quadrierte Amplitudenwerte in einer 2x-Bit-Darstellung zu erhalten,
   eine Aufsummierungseinrichtung (70) zum Aufsummieren der skalierten quadrierten Amplitudenwerte für jede Spektralgruppe, um eine jeweilige Quadratsumme in einer nicht-logarithmierten Darstellung (26) zu erhalten,
   eine Logarithmuseinrichtung (28; 82) zum Anwenden einer Logarithmusfunktion auf y Bits der nicht-logarithmierten Darstellung (26) jeder Quadratsumme für jede Spektralgruppe, um eine jeweilige skalierte logarithmierte Darstellung (30) zu erhalten, wobei y kleiner als 2x ist,

eine Reskalierungseinrichtung (32; 76) zum Addieren oder Subtrahieren (44) eines jeweiligen Korrekturwerts, der sich durch Anwenden der Logarithmusfunktion auf das Quadrat des jeweiligen Skalierungsfaktors ergibt, zu bzw. von der skalierten logarithmierten Darstellung (30) für jede logarithmierte Darstellung (30), um eine logarithmierte Darstellung (34) jeder Spektralgruppenenergie zu erhalten, wobei die Spektralgruppenenergien aller Spektralgruppen das gleiche Skalierungsniveau aufweisen; und
einem MPEG-Codestromerzeuger (156) zum, basierend auf den Spektralgruppenenergien der Spektralgruppen in logarithmierter Darstellung mit gleichem Skalierungsniveau (34), Erzeugen eines codierten MPEG-Datenstroms, der eine codierte Version des Audiosignals (164) darstellt.

2. Audiocodierer gemäß Anspruch 1, bei dem die Steuereinrichtung (64) ausgebildet ist, um den jeweiligen Skalierungsfaktor auf eine k-te Potenz von 2 einzustellen, und die Skalierungseinrichtung (66) ausgebildet ist, um die x-Bit-Darstellung eines Amplitudenwertes der Gruppe in einem x-Bit-Werteregister um k Bits zu verschieben.

3. Audiocodierer gemäß Anspruch 1 oder 2, bei dem die Quadrierungseinrichtung (68) ein 2x-Ergebnisregister aufweist und ausgebildet ist, um einen vorbestimmten skalierten quadrierten Amplitudenwert der skalierten quadrierten Amplitudenwerte in der 2x-Bit-Darstellung in dem 2x-Ergebnisregister abzulegen, und die Aufsummierungseinrichtung (70) ausgebildet ist, einen y-Bit-Ausschnitt der 2x-Bit-Darstellung in dem 2x-Ergebnisregister auszulesen, während dieselbe die restlichen Bits in dem 2x-Ergebnisregister unberücksichtigt lässt, um den y-Bit-Ausschnitt zusammen mit y-Bit-Ausschnitten der anderen skalierten quadrierten Amplitudenwerte aufzusummieren und die Quadratsumme in ein y-Bit-Register zu schreiben.

4. Audiocodierer gemäß einem der vorhergehenden Ansprüche, bei dem die Logarithmierungseinrichtung (28; 72) ausgebildet ist, um die y-Bits der nicht-logarithmierten Darstellung (26) derart zu bearbeiten, dass die skalierte logarithmierte Darstellung (30) einer y-Bit-Darstellung des Logarithmus Dualis der nicht-logarithmierten y-Bit-Darstellung (26) dividiert durch eine Zahl größer oder gleich y entspricht, und die Reskalierungseinrichtung (32) ausgebildet ist, einen Betrag zu der skalierten logarithmierten Darstellung (30) zu addieren bzw. von derselben zu subtrahieren, der dem Logarithmus Dualis des Quadrats des jeweiligen Skalierunasfaktors dividiert durch die Zahl entspricht.

5. Audiocodierer gemäß Anspruch 4, bei dem die Zahl 64 und $y = x = 32$ ist.

6. Audiocodierer gemäß einem der vorhergehenden Ansprüche, bei der y gleich x ist.

7. Audiocodierer gemäß einem der vorhergehenden Ansprüche, bei dem der Codestromerzeuger (156) ausgebildet ist, um den codierten Datenstrom ferner basierend auf einem psychoakustischen Modell (162) zu erzeugen.

8. Audiocodierer nach Anspruch 7, bei dem der Codestromerzeuger ein MPEG ½ Layer 3-Encoder oder ein MPEG 2/4 AAC-Encoder ist.

9. Audiocodierer gemäß einem der vorhergehenden Ansprüche, bei dem der Codestromerzeuger (156) ein TNS-Modul, ein PNS-Modul zum Durchführen der Berechnung und einen Skalenfaktorschätzer aufweist.

10. Audiocodierverfahren mit folgenden Schritten:

Berechnung von Spektralgruppenenergien eines Audiosignals mittels eines Festkommaprozessors unter Zerlegen des Audiosignals (164) in Frames in einem Zeitbereich,
Transformieren des Audiosignals in jedem Frame vom Zeitbereich in einen Spektralbereich, um für jedes Frame eine Gruppe von spektralen Komponenten zu erhalten, von denen jede einen Amplitudenwert in einer nicht-logarithmierten x-Bit-Darstellung aufweist, so dass Folgen von Amplitudenwerten entstehen, die in unterschiedliche Spektralgruppen (170) eingeteilt sind,
Berechnen einer Spektralgruppenenergie für jede Spektralgruppe im jeweiligen Frame als die Quadratsumme der Amplitudenwerte ($22_1$-$22_N$; $84_1$-$84_N$) mittels
Einstellen eines jeweiligen Skalierungsfaktors für jede Spektralgruppe abhängig von der Anzahl (N) der Amplitudenwerte der jeweiligen Spektralgruppe und der kleinsten Anzahl von ungenutzten Bit-Positiorien in den x-Bit-Darstellungen der Amplitudenwerte der jeweiligen Spektralgruppe,
Skalieren der nicht-logarithmierten x-Bit-Darstellung ($84_1$-$84_N$) jedes Amplitudenwerts für jede Spektralgruppe mit dem jeweiligen Skalierungsfaktor, um skalierte Amplitudenwerte in einer x-Bit-Darstellung zu erhalten,
Quadrieren der skalierten Amplitudenwerte in der x-Bit-Darstellung, um skalierte quadrierte Amplitudenwerte in einer 2x-Bit-Darstellung zu erhalten,

Aufsummieren der skalierten quadrierten Amplitudenwerte für jede Spektralgruppe, um eine jeweilige Quadratsumme in einer nicht-logarithmierten Darstellung (26) zu erhalten,

Anwenden einer Logarithmusfunktion auf y Bits der nicht-logarithmierten Darstellung (26) jeder Quadratsumme für jede Spektralgruppe, um eine jeweilige skalierte logarithmierte Darstellung (30) zu erhalten, wobei y kleiner als 2x ist, und Addieren oder Subtrahieren (44) eines jeweiligen Korrekturwerts, der sich durch Anwenden der Logarithmusfunktion auf das Quadrat des jeweiligen Skalierungsfaktors ergibt, zu bzw. von der skalierten logarithmierten Darstellung (30) für jede skalierte logarithmierte Darstellung, um eine logarithmierte Darstellung (34) jeder Spektralgruppenenergie zu erhalten, wobei die Spektralgruppenenergien aller Spektralgruppen das gleiche Skalierungsniveau aufweisen;

und

Erzeugen eines codierten MPEG-Datenstroms, der eine codierte Version des Audiosignals (164) darstellt, basierend auf den Spektralgruppenenergien der Spektralgruppen in logarithmierter Darstellung mit gleichem Skalierungsniveau (34).

11. Computer-Programm mit einem Programmcode zur Durchführung des Verfahrens nach Anspruch 10, wenn das Computer-Programm auf einem Computer abläuft.

## Claims

1. Audio encoder, comprising
an apparatus implemented in a fixed-point processor for calculating spectral group energies of an audio signal, comprising

transformation means (152) for decomposing the audio signal (164) into frames in a time domain and for transforming the audio signal in each frame from the time domain to a spectral domain in order to obtain a group of spectral values for each frame, each comprising an amplitude value in an x-bit representation with the logarithm not taken, such that series of amplitude values result that are divided into different spectral groups (170);

group energy calculation means (24; 80) for calculating spectral group energy for each spectral group in the respective frame as a sum of squares of the amplitude values ($22_1$-$22_N$; $84_1$-$84_N$), the group energy calculation means (24; 80) comprising:

control means (36; 64) for adjusting a respective scaling factor for each spectral group in dependence on the number (N) of the amplitude values of the respective spectral group and the smallest number of unused bit positions in the x-bit representations of the amplitude values of the respective spectral group,

scaling means (66) for scaling the x-bit representation with the logarithm not taken ($84_1$-$84_N$) of each amplitude value for each spectral group with the respective scaling factor in order to obtain scaled amplitude values in an x-bit representation;

squaring means (68) for squaring the scaled amplitude values in the x-bit representation in order to obtain scaled squared amplitude values in a 2x-bit representation,

summation means (70) for summing up the scaled squared amplitude values for each spectral group in order to obtain a respective sum of squares in a representation with the logarithm not taken (26),

means for taking the logarithm (28; 82) for applying a logarithmic function to y bits of the representation with the logarithm not taken (26) of each sum of squares for each spectral group in order to obtain a respective scaled representation with the logarithm taken (30), wherein y is less than 2x; and

rescaling means (32; 76) for adding or subtracting (44) a respective correction value, which results by applying the logarithmic function to the square of the respective scaling factor, to or from respectively the scaled representation with the logarithm taken (30) for each representation with the logarithm taken (30), in order to obtain a representation with the logarithm taken (34) of each spectral group energy, wherein the spectral group energies of all spectral groups have the same scaling level,

an MPEG code stream generator (156) for, based on the spectral group energies of the spectral groups in a representation with the logarithm taken having the same scaling level (34), generating an encoded MPEG data stream representing an encoded version of the audio signal (164).

2. Audio encoder according to claim 1, wherein the control means (64) is configured to adjust the respective scaling factor to a $k^{th}$ power of 2, and the scaling means (66) is configured to shift the x-bit representation of an amplitude value of the group in an x-bit value register by k bits.

**3.** Audio encoder according to claim 1 or 2, wherein the squaring means (68) comprises a 2x result register and is configured to deposit a predetermined scaled squared amplitude value of the scaled squared amplitude values in the 2x-bit representation in the 2x result register, and the summation means (70) is configured to read an y-bit section of the 2x-bit representation from the 2x result register while disregarding the remaining bits in the 2x result register in order to sum up the y-bit section together with y-bit sections of the other scaled squared amplitude values and write the sum of squares into an y-bit register.

**4.** Audio encoder according to one of the preceding claims, wherein the means for taking the logarithm (28; 72) is configured to process the y-bits of the representation with the logarithm not taken (26) such that the scaled representation with the logarithm taken (30) corresponds to an y-bit representation of the logarithm dualis of the y-bit representation with the logarithm not taken (26) divided by a number greater than or equal to y, and the rescaling means (32) is configured to add or subtract an amount to or from the scaled representation with the logarithm taken (30) that corresponds to the logarithm dualis of the square of the respective scaling factor divided by the number.

**5.** Audio encoder according to claim 4, wherein the number is 64 and $y = x = 32$.

**6.** Audio encoder according to one of the preceding claims, wherein y equals x.

**7.** Audio encoder according to one of the preceding claims, wherein the code stream generator (156) is configured to generate the encoded data stream further based on a psychoacoustic model (162).

**8.** Audio encoder according to claim 7, wherein the code stream generator is an MPEG 1/2 Layer-3 encoder or an MPEG 2/4 AAC encoder.

**9.** Audio encoder according to one of the preceding claims, wherein the code stream generator (156) comprises a TNS module, a PNS module for performing the calculation and a scale factor estimator.

**10.** Audio encoding method, comprising:

calculating spectral group energies of an audio signal using a fixed-point processor by means of
decomposing the audio signal (164) into frames in a time domain,
transforming the audio signal in each frame from the time domain to a spectral domain, in order to obtain a group of spectral values for each frame, each comprising an amplitude value in an x-bit representation with the logarithm not taken, such that series of amplitude values result that are divided into different spectral groups (170),
calculating spectral group energy for each spectral group in the respective frame as the sum of squares of the amplitude values ($22_1$-$22_N$; $84_1$-$84_N$), using
adjusting a respective scaling factor for each spectral group in dependence on the number (N) of the amplitude values of the respective spectral group and the smallest number of unused bit positions in the x-bit representations of the amplitude values of the respective spectral group,
scaling the x-bit representation with the logarithm not taken ($84_1$-$84_N$) of each amplitude value for each spectral group with the respective scaling factor in order to obtain scaled amplitude values in an x-bit representation;
squaring the scaled amplitude values in the x-bit representation in order to obtain scaled squared amplitude values in a 2x-bit representation,
summing up the scaled squared amplitude values for each spectral group in order to obtain a respective sum of squares in a representation with the logarithm not taken (26),
applying a logarithmic function to y bits of the representation with the logarithm not taken (26) of each sum of squares for each spectral group in order to obtain a respective scaled representation with the logarithm taken (30), wherein y is less than 2x; and
adding or subtracting (44) a respective correction value, which results by applying the logarithmic function to the square of the respective scaling factor, to or from respectively the scaled representation with the logarithm taken (30) for each scaled representation with the logarithm taken (30), in order to obtain a representation with the logarithm taken (34) of each spectral group energy, wherein the spectral group energies of all spectral groups have the same scaling level;
and
generating an encoded MPEG data stream representing an encoded version of the audio signal (164) based on the spectral group energies of the spectral groups in a representation with the logarithm taken having the same scaling level (34).

**11.** Computer program with a program code for performing the method according to claim 10, when the computer program runs on a computer.

**Revendications**

**1.** Codeur audio avec
un dispositif, mis en oeuvre dans un processeur à virgule fixe, destiné à calculer des énergies de groupe spectral d'un signal audio avec
un moyen de transformation (152) destiné à décomposer le signal audio (164) en trames dans un domaine temporel et à transformer le signal audio dans chaque trame du domaine temporel en un domaine spectral, pour obtenir pour chaque trame un groupe de composantes spectrales, chacune desquelles présentant une valeur d'amplitude dans une représentation de x bits non logarithmique, de sorte qu'il se produise des suites de valeurs d'amplitude qui sont divisées en groupes spectraux différents (170);
un moyen de calcul d'énergie de groupe (24; 80) destiné à calculer une énergie de groupe spectral pour chaque groupe spectral dans la trame respective comme somme du carré des valeurs d'amplitude ($22_1$ à $22_N$; $84_1$ à $84_N$), le moyen de calcul d'énergie de groupe (24; 80) présentant:

un moyen de commande (36; 64) destiné à régler un facteur d'échelle respectif pour chaque groupe spectral en fonction du nombre (N) de valeurs d'amplitude du groupe spectral respectif et du nombre le plus petit de positions de bit non utilisées dans les représentations de x bits des valeurs d'amplitude du groupe spectral respectif,
un moyen de mise à l'échelle (66) destiné à mettre à l'échelle la représentation de x bits non logarithmique ($84_1$ à $84_N$) de chaque valeur d'amplitude pour chaque groupe spectral par le facteur d'échelle respectif, pour obtenir des valeurs d'amplitude mises à l'échelle dans une représentation de x bits,
un moyen d'élévation au carré (68) destiné à élever au carré les valeurs d'amplitude mises à l'échelle dans la représentation de x bits, pour obtenir des valeurs d'amplitude élevées au carré mises à l'échelle dans une représentation de 2x bits,
un moyen d'addition (70) destiné à additionner les valeurs d'amplitude élevées au carré mises à l'échelle pour chaque groupe spectral, pour obtenir une somme de carrés respective dans une représentation non logarithmique (26),
un moyen de tables de logarithmes (28; 82) destiné à appliquer une fonction logarithmique de y bits de la représentation non logarithmique (26) de chaque somme de carrés pour chaque groupe spectral, pour obtenir une représentation logarithmique mise à l'échelle respective (30), y étant inférieur à 2x,
un moyen de remise à l'échelle (32; 76) destiné à additionner ou soustraire (44) une valeur de correction respective qui résulte de l'application de la fonction logarithmique au carré du facteur d'échelle respectif à ou de la représentation logarithmique mise à l'échelle (30) pour chaque représentation logarithmique (30), pour obtenir une représentation logarithmique (34) de chaque énergie de groupe spectral, les énergies de groupe spectral de tous les groupes spectraux présentant le même niveau d'échelle; et
un générateur de flux de codes MPEG (156) destiné à générer, sur base des énergies de groupe spectral dans la représentation logarithmique à même niveau d'échelle (34), un flux de données MPEG codées représentant une version codée du signal audio (164).

**2.** Codeur audio selon la revendication 1, dans lequel le moyen de commande (64) est conçu pour régler le facteur d'échelle respectif à une k-ième puissance de 2 et le moyen de mise à l'échelle (66) est conçu pour déplacer la représentation de x bits d'une valeur d'amplitude du groupe dans un registre de valeurs de x bits de k bits.

**3.** Codeur audio selon la revendication 1 ou 2, dans lequel le moyen d'élévation au carré (68) présente un registre de résultats de 2x et est conçu pour entrer une valeur d'amplitude élevée au carré mise à l'échelle prédéterminée parmi les valeurs d'amplitude élevées au carré mises à l'échelle dans la représentation de 2x bits dans le registre de résultats de 2x bits, et le moyen d'addition (70) est conçu pour lire un segment de y bits de la représentation de 2x bits du registre de résultats de 2x, tandis qu'il laisse les bits restants inchangés dans le registre de résultats de 2x, pour additionner le segment de y bits avec les segments de y bits des autres valeurs d'amplitude élevées au carré mises à l'échelle et pour écrire la somme des carrés dans un registre de y bits.

**4.** Codeur audio selon l'une des revendications précédentes, dans lequel le moyen de tables de logarithmes (28; 72) est configuré pour traiter les y bits de la représentation non logarithmique (26) de sorte que la représentation logarithmique mise à l'échelle (30) d'une représentation de y bits du logarithme Dualis de la représentation de y

**EP 1 825 356 B1**

bits non logarithmique (26) divisée par un nombre soit supérieure ou égale à y, et le moyen de remise à l'échelle (32) est conçu pour ajouter ou soustraire une quantité à ou de la représentation logarithmique mise à l'échelle (30) qui correspond au logarithme Dualis du carré du facteur d'échelle respectif divisé par le nombre.

5.  Codeur audio selon la revendication 4, dans lequel le nombre est 64 et y = x = 32.

6.  Codeur audio selon l'une des revendications précédentes, dans lequel y est égal à x.

7.  Codeur audio selon l'une des revendications précédentes, dans lequel le générateur de flux de codes (156) est conçu pour générer par ailleurs le flux de données codées sur base d'un modèle psycho-acoustique (162).

8.  Codeur audio selon la revendication 7, dans lequel le générateur de flux de codes est un codeur MPEG ½ Layer 3 ou un codeur MPEG 2/4 AAC.

9.  Codeur audio selon l'une des revendications précédentes, dans lequel le générateur de flux de codes (156) présente un module de TNS, un module de PNS pour effectuer le calcul et un estimateur de facteurs d'échelle.

10. Procédé de codage audio aux étapes suivantes consistant à:

  calculer les énergies de groupe spectral d'un signal audio au moyen d'un processeur à virgule fixe en diviser le signal audio (164) en trames dans un domaine temporel,
  transformer le signal audio dans chaque trame du domaine temporel à un domaine spectral, pour obtenir pour chaque trame un groupe de composantes spectrales, chacune desquelles présentant une valeur d'amplitude dans une représentation de x bits non logarithmique, de sorte qu'il se produise des suites de valeurs d'amplitude qui sont divisées en groupes spectraux différents (170);
  calculer une énergie de groupe spectral pour chaque groupe spectral dans la trame respective comme somme du carré des valeurs d'amplitude ($22_1$ à $22_N$; $84_1$ à $84_N$) en:

    régler un facteur d'échelle respectif pour chaque groupe spectral en fonction du nombre (N) de valeurs d'amplitude du groupe spectral respectif et du nombre le plus petit de positions de bit non utilisées dans les représentations de x bits des valeurs d'amplitude du groupe spectral respectif,
    mettre à l'échelle la représentation de x bits non logarithmique ($84_1$ à $84_N$) de chaque valeur d'amplitude pour chaque groupe spectral par le facteur d'échelle respectif, pour obtenir des valeurs d'amplitude mises à l'échelle dans une représentation de x bits,
    élever au carré les valeurs d'amplitude mises à l'échelle dans la représentation de x bits, pour obtenir des valeurs d'amplitude élevées au carré mises à l'échelle dans une représentation de 2x bits,
    additionner les valeurs d'amplitude élevées au carré mises à l'échelle pour chaque groupe spectral, pour obtenir une somme de carrés respective dans une représentation non logarithmique (26),
    appliquer une fonction logarithmique à y bits de la représentation non logarithmique (26) de chaque somme de carrés pour chaque groupe spectral, pour obtenir une représentation logarithmique mise à l'échelle respective (30), y étant inférieur à 2x, et
    additionner ou soustraire (44) une valeur de correction respective qui résulte de l'application de la fonction logarithmique au carré du facteur d'échelle respectif à ou de la représentation logarithmique mise à l'échelle (30) pour chaque représentation logarithmique (30), pour obtenir une représentation logarithmique (34) de chaque énergie de groupe spectral, les énergies de groupe spectral de tous les groupes spectraux présentant le même niveau d'échelle; et
    générer un flux de données MPEG codées représentant une version codée du signal audio (164) sur base des énergies de groupe spectral dans la représentation logarithmique à même niveau d'échelle (34).

11. Programme d'ordinateur avec un code de programme pour réaliser le procédé selon la revendication 10 lorsque le programme d'ordinateur est exécuté sur un ordinateur.

MSB
LSB
10

| $x_{31}$ | $x_{30}$ | $x_{29}$ | $x_{28}$ | $\ldots$ | $x_1$ | $x_0$ |
|---|---|---|---|---|---|---|

Vz    $2^{-1}$    $2^{-2}$    $2^{-3}$    $2^{-30}$    $2^{-31}$

FIG. 1

$$y = \log_2(x)/64$$

FIG. 3

12a 16

32-bit multiplicator #1    32-bit multiplicator #2

| 0x12345678 |    **X**    | 0x12345678 | —12b

14a—    64-bit result product    —14b

| 0296cdb8 |    | 3be9b080 |    ←—14

OBERER 32-BIT TEIL
-> WEITERVERWENDET

UNTERER 32-BIT TEIL
-> VERWORFEN

**FIG. 2a**

12a 16

32-bit multiplicator #1    32-bit multiplicator #2

| 0x00004321 |    **X**    | 0x00004321 | —12b

14a—    64-bit result product    —14b

| 00000000 |    | 23349482 |

OBERER 32-BIT TEIL
-> WEITERVERWENDET

UNTERER 32-BIT TEIL
-> VERWORFEN

**FIG. 2b**

FIG. 4

FIG. 5

EP 1 825 356 B1

100 — STEUEREINRICHTUNG UNTERSUCHT FREQUENZLINIENWERTE DER GRUPPE UND STELLT SKALIERUNGSFAKTOR EIN

102 — STEUEREINRICHTUNG VERANLASST SCHIEBREGISTER DIE REGISTERINHALTE MIT DEN FREQUENZLINIENWERTE DER GRUPPE GEMÄSS DEM SKALIERUNGSFAKTOR ZU SCHIEBEN

104 — STEUEREINRICHTUNG BEWIRKT, DASS QUADRIERER JEDEN DER REGISTERINHALTE QUADRIERT UND DIE OBERE HÄLFTE DES 2x-BIT-ERGEBNISSES IN DAS ENTSPRECHENDE REGISTER ZURÜCHGESCHRIEBEN WIRD

106 — STEUEREINRICHTUNG BILDET MITTELS DES SUMMIERERS EINE SUMME DER REGISTERINHALTE

108 — STEUEREINRICHTUNG WEIST DEN LOGARITHMIERER AN, DIE SUMME ZU LOGARITHMIEREN, UND DEN DIVIDIERER, DAS ERGEBNIS DURCH 64 ZU DIVIDIEREN

110 — STEUEREINRICHTUNG WEIST DEN SUBTRAHIERER AN, VON DEM LOGARITHMIERTEN UND DIVIDIERTEN WERT EINEN WERT ABZUZIEHEN, DER VON DEM SKALIERUNGSFAKTOR ABHÄNGT

## FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6754618 B1
- US 5608663 A
- US 5197024 A

- US 6732071 B
- US 6351730 B
- US 5764698 A